# FASCICULE DE BREVET EUROPEEN

(11) **EP 1 509 876 B1**
(45) Date de publication et mention de la délivrance du brevet: **29.11.2006**
(21) Numéro de dépôt: 03755211.4
(22) Date de dépôt: 27.05.2003
(51) Int. Cl.: G06K 19/077, B41M 3/14

(54) **PROCEDE ET DISPOSITIF DE PROTECTION D'INSCRIPTIONS A LIRE**
VERFAHREN UND EINRICHTUNG ZUM SCHUTZ VON TEXT
METHOD AND DEVICE FOR PROTECTING TEXT FOR READING

(30) Priorité: 29.05.2002 FR 0206559
(43) Date de publication de la demande: 02.03.2005
(73) Titulaire: Trantoul, François, 34400 Lunel (FR); FASVER SA,, 34670 Baillargues (FR); Inside Contactless, 13856 Aix en Provence Cedex 3 (FR)
(72) Inventeur: SERRA, Didier, F-13170 Les Pennes Mirabau (FR); JOUVE, Eric, F-13530 Trets (FR); PIC, Pierre, F-13600 La Ciotat (FR); LEROY, Jean-Yves, F-34160 Restinclieres (FR); TRANTOUL, François, 34400 Lunel (FR)
(74) Mandataire: Cabinet BARRE LAFORGUE & associés
(86) Numéro de dépôt international: PCT/FR2003/001602
(87) Numéro de publication internationale: WO 2003/100721

(56) Documents cités:
- EP-A- 0 271 941
- EP-A- 0 977 145
- FR-A- 2 793 726

## Description

L'invention concerne la protection d'inscriptions à lire réalisées sur une face d'un objet tel qu'un document officiel.

Dans de nombreuses applications, il est nécessaire de protéger des inscriptions préalablement réalisées sur des objets, contre les falsifications et/ou à des fins d'authentification et/ou pour garantir leur intégrité.

Une solution connue (par exemple EP-0271941 ou US 5 232 527) consiste à couvrir les inscriptions à lire d'un film transparent (c'est-à-dire permettant la lecture des inscriptions qu'il couvre) adhérant sur l'objet et présentant, après la pose sur l'objet, une face externe libre.

L'objet peut être par exemple un document officiel (passeport, visa, carte d'identité, permis de conduire, carte bancaire, carte de contrôle d'accès, badges, étiquettes, acte légal, contrat, plan cadastral, plan de fabrication ou autre plan ...) portant des inscriptions à lire telles que des mentions variables (nom, prénom, adresse, photo, ... d'un titulaire ou des parties ...) et/ou des mentions communes (motifs sécuritaires, matrices, cadres, noms de champs, sceaux, hologrammes, ...) à protéger contre les tentatives de falsification et/ou à des fins d'authentification et/ou pour garantir leur intégrité (c'est-à-dire le fait qu'elles n'ont pas été altérées ou modifiées). L'objet peut aussi être un emballage, un produit ou article quelconque portant des inscriptions à lire qui doivent être protégées telles que texte, logotype, dessin, photographie, numéro de série, ...

Dans tout le texte, on désigne par "inscription à lire" tout signe ou motif réalisé sur le document, pouvant être lu par l'homme au moins sous certaines conditions (notamment sous éclairage normal en lumière visible ; et/ou sous éclairage spécifique ; et/ou après activation d'un dispositif électronique (écran) ou autre ...) susceptible d'être au moins partiellement représenté par des données numériques enregistrables. Il peut s'agir de textes (écriture manuelle ou caractères imprimés) ; codes (ASCII, codes universels à lecture optoélectronique tels que codes à barres ...) ; images ou photographies...

Par ailleurs, on connaît des dispositifs à circuit intégré (puces) à mémoire à liaison de transmission d'informations sans contact, notamment pour la lecture, permettant d'associer des informations personnalisées de façon sécuritaire à des objets tels que des cartes bancaires, des badges électroniques, des étiquettes électroniques ... WO 02/21436 envisage l'intégration d'une puce sans contact à un document d'identification d'une personne physique, notamment lors de la personnalisation du document, par exemple par intégration dans un film de sécurité ou par prise en sandwich entre des couches en feuillets du document Ce document n'indique pas comment une telle puce peut être réalisée et n'explique pas comment cette puce sans contact pourrait être intégrée en pratique à un film de sécurité. Or, compte tenu de l'épaisseur d'une telle puce, des problèmes liés à la connexion électrique du circuit intégré avec 1' (ou les) antenne(s) associée(s), et de la dimension prohibitive de l'antenne nécessaire pour obtenir un couplage avec un lecteur à une distance suffisante par rapport à la place disponible sur le document, la variante citée d'intégration dans le film de sécurité n'est pas, au vu de ce document, réalisable en pratique.

L'incorporation de la puce en sandwich entre deux feuilles du document est aussi coûteuse et pose des problèmes de réalisation pratique. En particulier, une telle puce, relativement fragile, risque de ne pas résister au procédé d'impression des inscriptions de personnalisation. Si elle est associée au document après cette impression, une telle association est complexe et peu fiable.

En tout état de cause, une puce incorporée au document en sandwich est physiquement dissociée des inscriptions à lire, de sorte que des altérations de la puce et des inscriptions à lire peuvent être effectuées indépendamment.

Il est aussi à noter que si une puce sans contact et son antenne sont de petites dimensions, il en résulte une faible distance de lecture. De plus, il est nécessaire de placer très précisément la puce par rapport à un dispositif de lecture -notamment par rapport à l'axe de l'antenne de ce dispositif de lecture-.

Par ailleurs, FR-2 812 482 ou EP-0826190 décrivent des dispositifs de puce(s) sans contact par couplage magnétique entre deux antennes dont une bobine d'antenne connectée électriquement au circuit intégré de la puce -notamment de type "coil on chip" (bobine intégrée à la puce)- et une bobine d'antenne passive de plus grandes dimensions permettant, à moindre encombrement, d'augmenter la distance de lecture de la puce. Les deux antennes peuvent être magnétiquement couplées par l'intermédiaire d'une boucle de couplage formée par la grande bobine, et dont les dimensions correspondent à celles de la petite bobine. FR-2 812 482 mentionne que la grande bobine peut être incorporée dans l'épaisseur de la couverture d'un carnet dont chaque page reçoit un ou plusieurs micromodule(s) sans contact (puce avec son antenne intégrée (petite bobine)) fixé(s) sur une feuille plastique agencée dans un carnet. Ces dispositifs ne proposent pas une solution au problème de la protection efficace d'inscriptions à lire, notamment contre les tentatives de falsification et/ou à des fins d'authentification et/ou pour garantir leur intégrité. En particulier, les puces sont elles-mêmes non protégées et peuvent être détériorées, voire remplacées par un faussaire. Leur pose sur chaque page du carnet est coûteuse et délicate, notamment si un couplage du type décrit par EP-0826190 est envisagé. En outre, l'incorporation de l'antenne de grandes dimensions dans l'épaisseur de la couverture est coûteuse et, rendant cette antenne invisible, ne permet pas un positionnement ultérieur précis de chaque puce par rapport à cette antenne. Or, ce positionnement précis est indispensable à l'obtention d'un couplage magnétique suffisant.

Egalement, il est à noter que la solution décrite dans FR-2 812 482 ne procure pas en pratique un couplage efficace de chaque antenne individuelle avec l'antenne collective.

Ainsi, l'état antérieur de la technique ne fournit pas de solution économique, simple, fiable, compatible avec une mise en oeuvre pratique à l'échelle industrielle, permettant d'associer effectivement un dispositif électronique à microcircuit(s) à mémoire à lecture sans contact, dit puce sans contact, à un objet portant des inscriptions à lire en vue de la protection de ces inscriptions à lire.

La présente invention vise de façon générale à résoudre ce problème.

Plus particulièrement, l'invention vise à éviter que la puce sans contact ne risque de masquer les inscriptions à lire, et à procurer une distance de lecture suffisante de la puce sans contact -notamment de l'ordre de plusieurs centimètres- et une faible précision de positionnement latéral de l'objet et de la puce sans contact par rapport à un dispositif de lecture -notamment de l'ordre de plusieurs millimètres, voire plusieurs centimètres-.

L'invention vise aussi à proposer une protection des inscriptions dans laquelle une puce sans contact est combinée avec un film protecteur transparent, en ce sens que la puce sans contact renforce la protection fournie par le film et le film de sécurité renforce la protection fournie par la puce sans contact. A ce titre, l'invention vise plus particulièrement à permettre l'incorporation effective d'une puce sans contact dans un film protecteur transparent, notamment tel que décrit dans EP-0271941 ou US-5 232 527, ce film protégeant la puce elle-même, et l'utilisation de cet ensemble pour la protection d'inscriptions à lire.

Plus particulièrement, l'invention vise à obtenir une telle protection par mise en oeuvre uniquement d'étapes simples de collage de film(s) et/ou d'impression, notamment sans nécessiter l'incorporation d'un élément au sein d'une épaisseur de papier ou de carton ou en sandwich entre deux feuilles de papier ou carton.

L'invention vise aussi à permettre une mise en oeuvre simple et rapide du procédé de protection notamment grâce auquel un positionnement précis de différents éléments est obtenu aisément, sans technologie complexe.

A ce titre, l'invention vise en particulier à proposer une protection pouvant être utilisée par les administrations locales pour l'émission de documents officiels (par exemple cartes d'identité, passeports, permis de conduire, visas ...) ou lors de la fabrication industrielle d'emballages, produits ou articles, sans nécessiter l'emploi de matériels complexes, lourds et coûteux.

Dans tout le texte, le terme "antenne" désigne de façon générale toute ligne électriquement conductrice permettant de réaliser un couplage électromagnétique -notamment inductif et/ou magnétique- avec un autre dispositif électromagnétique. Par "couplage électromagnétique" on désigne toute forme de couplage à distance par l'intermédiaire de champ(s) électrique(s) et/ou magnétique(s) et/ou électromagnétique(s). Par ailleurs, le terme "microcircuit" désigne tout dispositif de taille inférieure à 5 mm x 5 mm x 5 mm formant un circuit électronique réalisé essentiellement selon les technologies des circuits intégrés. Il peut s'agir en particulier d'une puce à mémoire (ROM, RAM, EPPROM, flash ...), et/ou à microprocesseur et/ou à logique câblée, dotée ou non d'autres fonctions non électroniques ou accessoires (antenne) ou de plusieurs puces associées pour former un tel dispositif.

L'invention concerne donc un procédé de protection d'inscriptions à lire conforme à la revendication 1.

L'invention s'étend à un dispositif de mise en oeuvre d'un procédé selon l'invention. L'invention concerne donc un dispositif conforme à la revendication 25.

La zone de couplage et l'antenne individuelle présentent des dimensions similaires, correspondant au moins sensiblement aux inscriptions, ou plus petites que ces inscriptions, de sorte que l'antenne individuelle ne masque pas les inscriptions. Avantageusement et selon l'invention, l'aire d'une zone de couplage, d'une antenne individuelle, et d'un microtranspondeur est inférieure à 10 mm². La zone de couplage est ainsi beaucoup plus petite que l'antenne d'adaptation, dont les dimensions peuvent correspondre au moins sensiblement à celles de l'encombrement de l'objet.

Le couplage électromagnétique doit intervenir pour au moins une position ou un état de l'objet, dans lequel les positions relatives de la zone de couplage de l'antenne d'adaptation et l'antenne individuelle sont telles que le couplage électromagnétique se produit. En particulier, avantageusement et selon l'invention, l'antenne d'adaptation et le film de sécurité sont dans des positions relatives adaptées pour que la zone de couplage, localisée sur l'antenne d'adaptation, vienne en regard de l'antenne individuelle. Il se peut que dans certaines positions de l'objet ou dans certains états de l'objet, le couplage électromagnétique ne se produise pas. Par exemple, dans le cas d'un objet formé d'un carnet, d'un livret ou de plusieurs feuillets, le couplage électromagnétique peut n'être obtenu que lorsque les feuilles ou feuillets sont les uns contre les autres, c'est-à-dire lorsque le carnet ou livret est fermé.

Chaque microtranspondeur. étant porté par un film de sécurité est, au final, protégé par ce film de sécurité d'une part vis-à-vis des agressions mécaniques, d'autre part, vis-à-vis des tentatives de falsification. En particulier, le film de sécurité étant posé nécessairement après réalisation des inscriptions à lire, le(s) microtranspondeur(s) ne subit(ssent) pas les étapes d'impression des inscriptions.

Il est à noter que contrairement à ce que prévoit WO 02/21436, dans un procédé et un dispositif selon l'invention, le dispositif électromagnétique à mémoire permettant l'enregistrement d'informations d'authentification n'est pas nécessairement entièrement incorporé dans le film de sécurité couvrant les inscriptions à lire. En particulier, l'antenne d'adaptation permettant en pratique d'obtenir une distance de lecture convenable et une précision de positionnement latéral suffisamment faible est imprimée sur un support et n'est pas incorporée dans une épaisseur d'une couverture en feuille de papier ou carton de l'objet. Egalement, chaque microtranspondeur étant précisément placé par rapport à un film de sécurité, la simple pose précise du film de sécurité sur l'objet (opération traditionnelle qui est facile à réaliser, y compris manuellement) permet d'assurer un positionnement relatif précis de chaque antenne individuelle de ce film de sécurité par rapport à une zone de couplage de l'antenne d'adaptation. Par ce simple fait, il en résulte une grande simplicité de réalisation et d'utilisation.

Les antennes (individuelle(s) et d'adaptation) sont adaptées pour permettre au moins la lecture sans contact. Elles peuvent permettre aussi l'écriture sans contact dans la mémoire. En variante, l'écriture peut être réalisée par une autre liaison, avec ou sans contact

En outre, avec l'invention, pour au moins une face inscrite de l'objet, un film de sécurité portant au moins un microtranspondeur et non une antenne d'adaptation, recouvre les inscriptions à lire. Cette dissociation renforce considérablement la protection contre les falsifications. Elle permet aussi de protéger une face inscrite ne présentant pas d'espace libre suffisant pour l'incorporation d'une antenne d'adaptation.

Avantageusement et selon l'invention, au moins une antenne d'adaptation est imprimée sur une face de l'objet, qui peut être ou non une face inscrite au sens de l'invention, c'est-à-dire portant des inscriptions à lire devant être protégées par enregistrement d'informations correspondantes dans un microtranspondeur. Après impression de l'antenne d'adaptation imprimée, avantageusement et selon l'invention on la couvre ensuite d'un film protecteur, notamment d'un film de sécurité si l'antenne d'adaptation est imprimée sur une face inscrite.

En variante préférentielle, avantageusement et selon l'invention, au moins une antenne d'adaptation est imprimée sur ou dans (incorporée entre plusieurs couches) un film de matière synthétique, dit film d'antenne, et portée par ce film d'antenne. On fait adhérer le film d'antenne à une face de l'objet.

Ce film d'antenne peut être un film de sécurité portant au moins un microtranspondeur qui peut être connecté à l'antenne d'adaptation, l'ensemble du circuit formé remplissant les deux fonctions (il est alors prévu au moins un autre film de sécurité exempt d'antenne d'adaptation). L'antenne d'adaptation peut aussi constituer une antenne principale pour un microtranspondeur auquel elle est électriquement reliée ; et faire office d'antenne d'adaptation pour un ou plusieurs microtranspondeur(s) associé(s) à un ou plusieurs film(s) de sécurité distinct(s) du film d'antenne. En variante, le film d'antenne n'est pas un film de sécurité (c'est-à-dire est exempt de microtranspondeur). Ainsi, avantageusement et selon l'invention, dans cette variante, l'antenne d'adaptation est imprimée sur un support d'impression qui n'est pas un film de sécurité portant au moins un microtranspondeur.

Avantageusement et selon l'invention on applique et on fait adhérer le film d'antenne sur une face de l'objet qui n'est pas une face inscrite -notamment sur une face de l'objet qui est le verso d'une feuille de l'objet dont le recto est une face inscrite-. Dès lors, grâce à l'invention, les inscriptions à lire sont protégées, au recto d'une feuille qui les porte, par un film de sécurité portant au moins un microtranspondeur, et au verso de cette feuille, par un film d'antenne, qui peut, comme le film de sécurité, aussi être un mince film de protection contre les tentatives de falsification. Le film de sécurité et/ou le film d'antenne incorpore(nt) avantageusement des moyens renforçant la protection contre les tentatives de falsification et/ou l'authentification (motifs photoluminescents, encres solubles, motifs d'aspect variable selon l'orientation d'éclairage et/ou de lecture, hologrammes, motifs antiphotocopie, fragilisations, adhérences différentielles de plusieurs couches en contact, ...). Dès lors, les tentatives de falsification par le recto comme par le verso de la feuille sont vouées à l'échec.

Par ailleurs, avantageusement et selon l'invention au moins une antenne d'adaptation est imprimée avec une encre transparente à la lumière visible et électriquement conductrice après séchage. Par exemple, on utilise une composition d'encre transparente incorporant au moins un composé polymère électriquement conducteur transparent tel qu'un polythiophène -notamment un mélange PEDT/PSS. De la sorte, l'antenne d'adaptation est invisible ou peu visible, et peut être associée à recouvrement d'inscriptions à lire sur l'objet. En variante, ou en combinaison, une partie d'au moins une antenne d'adaptation peut former un motif constituant lui-même une (ou plusieurs) inscription(s) à lire. De la sorte, on ne distingue pas ce motif formé par l'antenne d'adaptation des inscriptions à lire sous-jacentes.

En outre, avantageusement et selon l'invention, on utilise au moins un transfert, dit transfert d'antenne, comprenant une feuille support portant un film d'antenne adhésif, ce transfert d'antenne étant adapté pour permettre l'application et l'adhésion du film d'antenne sur une face de l'objet avec la séparation du film d'antenne de la feuille support. Avantageusement et selon l'invention, un tel transfert d'antenne est un transfert à sec à froid (l'adhésif étant du type sensible à la pression à froid, c'est-à-dire à température ambiante), ou, en variante un transfert à chaud (l'adhésif étant du type thermosensible). La mise en oeuvre de tels transferts est simple et bien maîtrisée.

Avantageusement et selon l'invention, au moins une antenne d'adaptation forme un circuit électrique résonnant, comprenant une inductance et une capacité électrique. Avantageusement et selon l'invention, au moins une antenne d'adaptation comprend une capacité électrique de valeur ajustable. Cette valeur est ajustable par exemple avant la pose, de façon à permettre l'obtention d'une bonne adaptation de l'antenne d'adaptation à chaque microtranspondeur associé, et ce avec une seule et même forme d'antenne d'adaptation. Ainsi, l'antenne d'adaptation peut être réalisée sous forme standardisée et son accord est réalisé lors de l'utilisation, de façon pouvant être prédéfinie, selon le nombre de microtranspondeur(s) associé(s) et la nature de chaque microtranspondeur associé.

L'antenne d'adaptation étant imprimée, il en va de même de cette capacité, réalisée par deux couches conductrices imprimées en regard pour former deux armatures de condensateur séparées par une couche d'isolant imprimée, l'une au moins des armatures étant en forme de peigne dont les dents peuvent être coupées par exemple par grattage de façon à en modifier l'aire active. La valeur de la capacité électrique peut aussi être déterminée et accordée avant réalisation de l'antenne de puissance. Par ailleurs cette capacité électrique peut aussi être incorporée dans un motif graphique du film d'antenne et/ou de l'objet, ou superposée à un tel motif, de sorte qu'elle soit difficilement décelable.

En outre, avantageusement et selon l'invention au moins une antenne d'adaptation est imprimée par sérigraphie.

Avantageusement et selon l'invention, on utilise au moins une même antenne d'adaptation comprenant plusieurs zones de couplage électromagnétique pour son couplage avec plusieurs antennes individuelles de plusieurs microtranspondeurs appartenant à un même film de sécurité ou à plusieurs films de sécurité associés à différentes faces inscrites. Avantageusement et selon l'invention, on utilise plusieurs films de sécurité comprenant chacun au moins un -notamment un seul- microtranspondeur, pour la protection d'inscriptions à lire sur plusieurs faces inscrites de l'objet. Avantageusement et selon l'invention, on utilise une seule antenne d'adaptation pour l'objet. Par exemple une seule antenne d'adaptation peut être prévue pour la protection d'un document officiel tel qu'un passeport sous forme de carnet ou de livret.

Par ailleurs, avantageusement et selon l'invention, on utilise au moins un film de sécurité comprenant au moins un microtanspondeur incorporé dans son épaisseur. Avantageusement et selon l'invention on utilise au moins un film de sécurité multicouche. Avantageusement et selon l'invention on utilise au moins un film de sécurité réalisé par impression, incorporant au moins un microtranspondeur dans l'épaisseur du film de sécurité lors de la réalisation par impression du film de sécurité, entre deux couches imprimées. Le microtranspondéur peut ainsi être intégré entre plusieurs couches de vernis et/ou d'adhésif du film de sécurité. Avantageusement et selon l'invention on utilise au moins un film de sécurité réalisé par impression sérigrapbique.

Avantageusement - et selon l'invention chaque microtranspondeur incorporé à un film de sécurité présente une épaisseur inférieure à 0,2 mm, et, dans le plan du film de sécurité, une aire inférieure à 10 mm². Avantageusement et selon l'invention chaque microtranspondeur incorporé à un film de sécurité présente une épaisseur comprise entre 50µ et 180µ.

En outre, avantageusement et selon l'invention, on utilise au moins un transfert, dit transfert de protection, comprenant une feuille support portant un film de sécurité adhésif, ce transfert de protection étant adapté pour permettre l'application et l'adhésion du film de sécurité sur une face inscrite de l'objet avec la séparation du film de sécurité de la feuille support. Avantageusement et selon l'invention, un tel transfert de protection est un transfert à sec à froid ou, en variante, un transfert à chaud.

Par ailleurs, avantageusement et selon l'invention on enregistre, dans au moins une mémoire d'au moins un microtranspondeur porté par au moins un film de sécurité couvrant des inscriptions à lire, des informations d'authentification d'au moins une partie de ces inscriptions à lire -notamment sous forme cryptée-. En variante ou en combinaison, avantageusement et selon l'invention on enregistre, dans au moins une mémoire d'au moins un microtranspondeur, au moins des informations d'authentification représentant une clé et/ou un algorithme d'authentification et/ou un certificat résultat d'un algorithme. Cet enregistrement est réalisé sous forme irréversible, c'est-à-dire qu'il n'est pas ensuite possible d'effacer ou de modifier les informations enregistrées. Cet enregistrement peut être effectué avant ou après la pose du film de sécurité et/ou de l'antenne d'adaptation sur l'objet. En variante ou en combinaison, avantageusement et selon l'invention, on utilise au moins un microtranspondeur formant un circuit logique.

L'invention concerne aussi un dispositif caractérisé en ce qu'il comprend au moins une antenne d'adaptation et/ou au moins un transfert d'antenne et/ou au moins un film de sécurité et/ou au moins un transfert de protection tel(s) que mentionué(s) ci-dessus.

L'invention s'étend à un objet conforme à la revendication 44.

D'autres buts, caractéristiques et avantages de l'invention apparaissent à la lecture de la description suivante qui se réfère aux figures annexées représentant des exemples non limitatifs de réalisation de l'invention et dans lesquelles :
- la figure 1 est une vue schématique en coupe d'un transfert de protection d'un dispositif selon l'invention,
- la figure 2 est une vue schématique en coupe d'un film d'antenne d'un dispositif selon l'invention,
- la figure 3 est une vue schématique en coupe illustrant un procédé selon l'invention, de protection d'une feuille d'un document à l'aide du transfert de protection de la figure 1 et du film d'antenne de la figure 2,
- la figure 4 est une vue schématique en perspective éclatée de la feuille protégée obtenue par le procédé selon l'invention conforme à la figure 3,
- les figures 5 et 6 sont des vues similaires à la figure 3 illustrant respectivement deux variantes de réalisation de l'invention,
- la figure 7 est une vue schématique en perspective d'un document tel qu'un passeport protégé par un procédé selon l'invention,
- la figure 8 est une vue schématique en perspective d'un détail de réalisation d'une zone de couplage électromagnétique d'une antenne d'adaptation d'un dispositif selon l'invention,
- la figure 9 est une vue schématique en perspective de détail de réalisation d'une capacité ajustable d'une antenne d'adaptation d'un dispositif selon l'invention,
- la figure 10 est une vue schématique en perspective illustrant l'utilisation d'un document protégé selon l'invention.

Sur les figures, les épaisseurs ont été exagérément agrandies à des fins d'illustration.

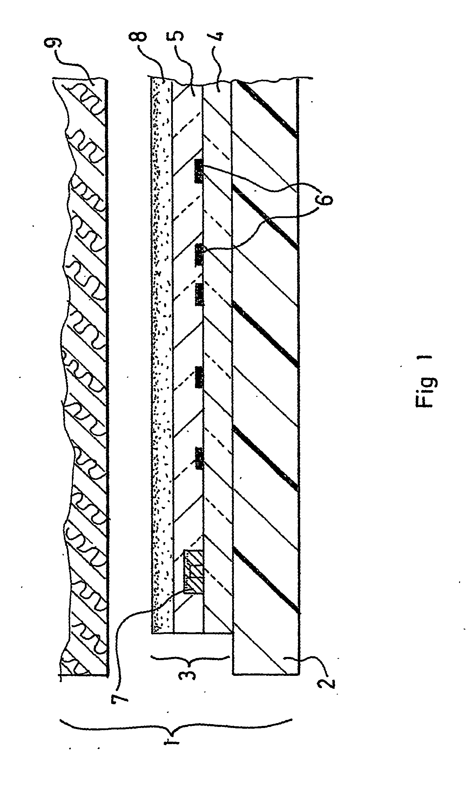

Le transfert de protection 1, représenté figure 1, comprend une feuille support 2 sur laquelle est imprimé un film de sécurité 3 adhésif transparent. Dans l'exemple représenté, ce film de sécurité 3 comprend deux couches de polyuréthane 4, 5 imprimées continues (au format du film de sécurité 3 ainsi formé) entre lesquelles au moins un motif de sécurité 6 est imprimé. Ce film de sécurité 3 est un film multicouche qui peut être réalisé par exemple comme décrit dans EP 0271941 ou US 5 232 527, par impressions successives de couches de composition polymérisant après impression. La feuille support 2 est par exemple en polystyrène pour permettre la séparation ultérieure du film de sécurité 3 par transfert sur un objet La première couche 4 de polyuréthane est imprimée en sérigraphie sur la feuille support 2. Sur cette première couche 4, avant la fin de la polymérisation, on imprime en sérigraphie le motif de sécurité 6, puis on colle un microcircuit à mémoire (puce) et à antenne intégrée (c'est-à-dire du type dit "coil on chip"), dit microtranspondeur 7. Toujours avant la fin de la polymérisation de la première couche 4, on imprime en sérigraphie la deuxième couche 5 de polyuréthane continue. On imprime ensuite, toujours en sérigraphie, une couche d'adhésif 8 continue qui est un adhésif sensible à la pression à froid (auto adhésif) ou un adhésif thermosensible. On couvre l'adhésif d'une feuille de protection 9 anti-adhérente, par exemple un papier siliconé.

Le microtranspondeur 7 choisi est par exemple une puce IC-Link ® PicoPass ® ou IC-Link ® MicroPass ® commercialisée par INSIDE TECHNOLOGIES (FRANCE).

Le microtranspondeur 7, d'épaisseur globalement supérieure à celle des couches 4, 5 (sur les figures, les échelles d'épaisseurs ne sont pas respectées et les épaisseurs relatives ne sont pas représentées de façon réaliste), peut être recouvert d'une pastille de film mince, ou même être porté par une pastille de film à la façon d'une étiquette, dotée de repères, pour faciliter sa pose sur la première couche 4, puis la réalisation de la deuxième couche 5.

De préférence, après la pose de ce microtranspondeur 7, la deuxième couche 5 de polyuréthane et la couche d'adhésif 8 sont imprimées avec une installation d'impression sérigraphique à écran plat et marbre plan, à relevage angulaire ou à plat de valeur appropriée, permettant d'éviter le frottement de la râcle et de l'écran au passage du microtranspondeur 7. L'emploi d'une technique d'impression par sérigraphie permet ainsi d'éviter l'application d'un rouleau presseur sur le microtranspondeur 7. Cela étant, d'autres techniques d'impression pourraient aussi être utilisées, en veillant à éviter toute détérioration du microtranspondeur 7 soit en exerçant des pressions suffisamment faibles, soit en prévoyant, dans les organes presseurs, des réserves ou logements recevant le microtranspondeur 7.

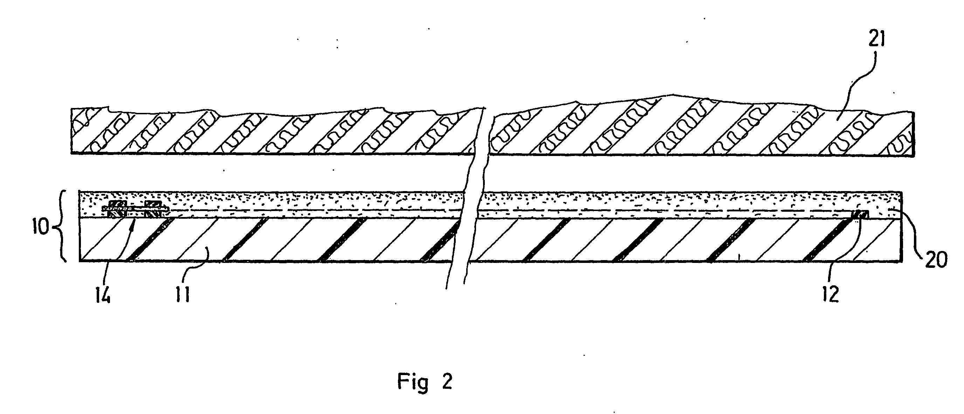

La figure 2 représente un film d'antenne 10 également réalisé par impressions sérigraphiques successives, sur une feuille support 11 par exemple en polyester, transparente ou non.

On imprime en sérigraphie sur cette feuille support 11 une antenne d'adaptation 12 en forme générale de grande boucle 15, de grandes dimensions, formant une inductance électrique, par exemple rectangulaire, c'est-à-dire antenne passive inductive. On utilise une composition d'encre électriquement conductrice, par exemple une encre conductrice argentique référence 5028 commercialisée par la société DUPONT DE NEMOURS (USA).

L'antenne d'adaptation 12 comprend aussi une capacité électrique 13. Elle constitue ainsi un circuit résonnant, et peut être qualifiée de "résonnateur". La capacité électrique 13 est formée de deux couches 13a, 13b d'encre conductrice superposées pour former deux armatures en regard, séparées par une couche 13c de vernis isolant. L'antenne d'adaptation 12 comprend aussi au moins une boucle 14 de couplage électromagnétique avec une antenne d'un microtranspondeur 7. Cette boucle 14 de couplage électromagnétique est de dimensions réduites, beaucoup plus faibles que celles de la grande boucle 15 formée par l'antenne d'adaptation 12, et correspondant à celles de l'antenne intégrée d'un microtranspondeur 7. Elle est formée d'une petite spire carrée réalisée sur une branche ou à un angle de la grande boucle 15.

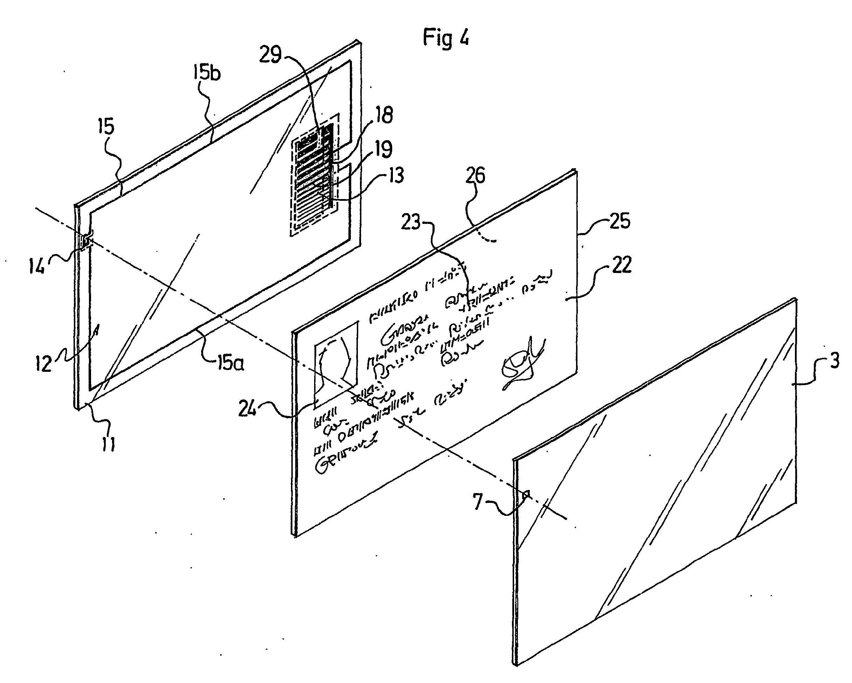

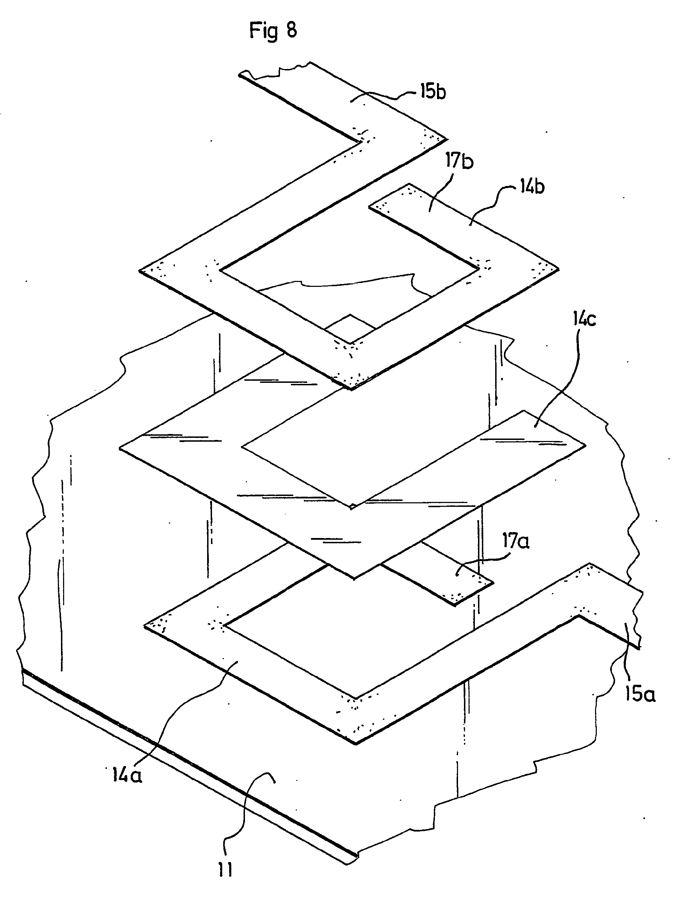

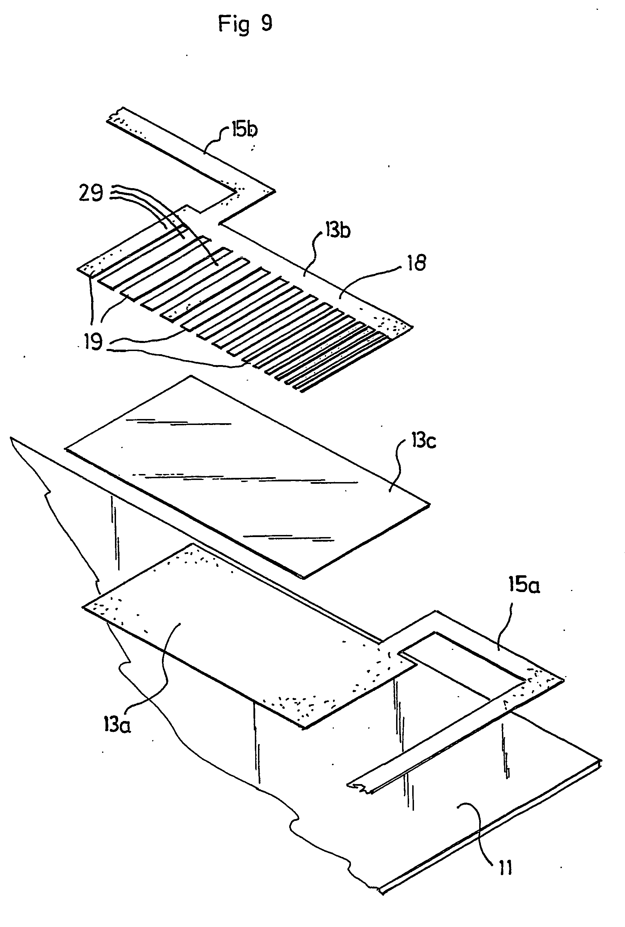

Les figures 8 et 9 illustrent une forme de réalisation d'une boucle 14 de couplage électromagnétique et, respectivement d'une capacité électrique 13. On imprime tout d'abord une première piste inférieure d'encre conductrice formant une moitié 15 de la grande boucle 15, une boucle inférieure carrée ouverte 14a de la boucle de couplage 14 et une armature inférieure 13a de cette capacité 13. On imprime ensuite une composition de vernis isolant électrique, par exemple une base de couplage référence UVIPRIM CV commercialisée par la société TIFLEX (FRANCE) formant un isolant 14c de la boucle de couplage 14 couvrant partiellement la boucle inférieure ouverte 14a, à l'exception de sa portion terminale 17a ; et une couche 13c d'isolant couvrant l'armature 13a de 1a capacité 13. On imprime ensuite une deuxième piste supérieure d'encre conductrice formant la deuxième moitié 15b de la grande boucle 15, une boucle supérieure carrée ouverte 14b de la boucle de couplage 14, superposée à la boucle inférieure 14a et à l'isolant 14c, la partie terminale 17b de cette boucle supérieure 14b étant électriquement reliée à la partie terminale 17a de la boucle inférieure 14a. La deuxième piste supérieure forme aussi une armature supérieure 13b de la capacité 13, superposée à l'armature inférieure 13a par l'intermédiaire de-la couche 13c d'isolant. L'armature supérieure 13b est de préférence en forme de peigne, c'est-à-dire présente des dents parallèles 19 de largeurs semblables ou différentes, s'étendant à partir d'une bande longitudinale commune 18, et pouvant être isolées de cette bande 18 après impression de l'antenne d'adaptation 12 par grattage de leur portion initiale de connexion à cette bande 18. Sur la figure 4 on a représenté deux dents 19 dont la portion initiale 29 a été grattée, de sorte que ces deux dents sont séparées de l'armature supérieure 13b. On peut ainsi ajuster la valeur de la capacité électrique 13 formée entre les armatures 13a, 13b.

On imprime au-dessus de l'antenne d'adaptation 12, une couche d'adhésif 20 continue, que l'on peut couvrir d'une feuille anti-adhérente 21, telle qu'un papier siliconé. Pour permettre l'ajustement de la capacité 13 par grattage au moment de l'utilisation, une réserve (non représentée sur les figures) peut être ménagée à travers l'adhésif 20 pour permettre l'accès aux portions initiales des dents 19 de l'armature' supérieure 13b, et leur grattage. Dans l'exemple représenté, la grande boucle 15 de l'antenne d'adaptation 12 forme un circuit électrique fermé à une seule spire. En variante non représentée, la grande boucle 15 d'antenne d'adaptation 12 peut comprendre plusieurs spires, soit juxtaposées dans le même plan, enroulées les unes dans les autres, soit superposées les unes au-dessus des autres par l'intermédiaire de couches de vernis isolant, soit juxtaposées enroulées et superposées. On augmente ainsi la valeur de son inductance électrique. De même, la boucle 4 de couplage peut être formée de plusieurs spires juxtaposées enroulées et/ou superposées. Le nombre de spires de la grande boucle 15 n'est pas nécessairement le même que celui de la boucle 14 de couplage. La capacité électrique 13 peut aussi comprendre plus d'une paire d'armatures 13a, 13b, reliées en série (superposées) ou en parallèle (juxtaposées).

On obtient en tout cas, un film d'antenne 10 (feuille support 11, antenne d'adaptation 12 et adhésif 20) recouvert de la feuille anti-adhérente 21.

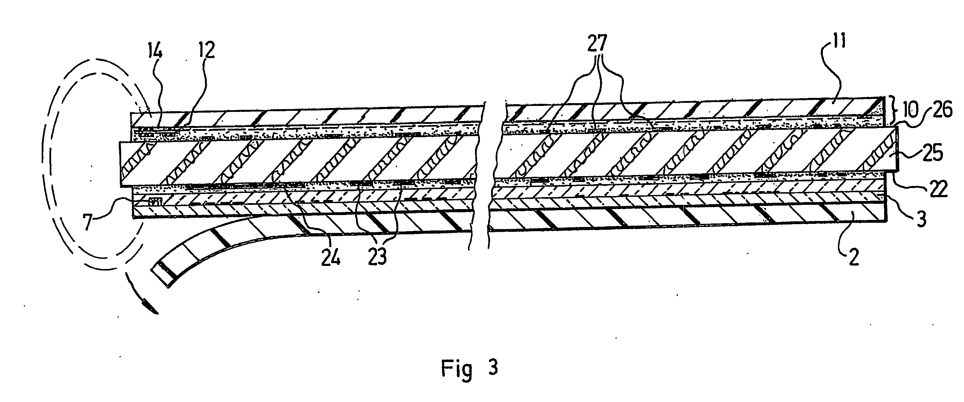

Sur les figures 3 et 4, l'objet à protéger est représenté sous forme d'une feuille 25 (page de passeport ; carte d'identité, ...) rectangulaire dont une face 22 au moins, dite face inscrite 22, et considérée-comme le recto de la feuille, porte des inscriptions à lire 23, par exemple une photographie 24, des mentions communes, des mentions variables (nom, prénom, adresse, signature, codes numériques ou à lecture optique ...) ou autres.

Le format du film de sécurité 3 est de préférence adapté pour couvrir entièrement la face inscrite 22. Rien n'empêche cependant de prévoir un format plus petit, le film de sécurité 3 ne couvrant des inscriptions à lire 23 que sur une partie de surface de la face inscrite 22.

L'antenne d'adaptation 12 peut être associée au verso de la feuille 25, c'est-à-dire sur sa face 26 opposée à la face inscrite 22. De préférence, l'antenne d'adaptation est choisie de forme correspondant au moins sensiblement à celle de la feuille 25, et pour s'étendre au voisinage de la périphérie de la face 26 de cette feuille 25. La grande boucle 15 est en effet aussi grande que possible.

Le microtranspondeur 7 est placé dans le film de sécurité 3 de façon à être ensuite (après pose sur la face inscrite) aussi discret que possible. On peut prévoir d'ailleurs de superposer le microtranspondeur 7 à un motif de la face inscrite de façon à ce qu'il se fonde au sein de ce motif sans pouvoir être facilement détecté à l'observation. La position du microtranspondeur 7 est aussi choisie de telle sorte qu'il vienne en regard d'une boucle 14 de couplage correspondante après la pose, pour assurer leur couplage électromagnétique relatif, c'est-à-dire pour permettre la lecture des informations enregistrées dans la mémoire du microtranspondeur 7 via la boucle 14 de couplage et l'antenne d'adaptation 12. Il est à noter que ces positions relatives précises sont obtenues en fait lors de la fabrication du film d'antenne 10 et du film de sécurité 3. Après réalisation des inscriptions à lire 23 sur la face inscrite 22, il suffit de poser les deux films 10, 3, l'un 3 au recto, l'autre 10 au verso de la feuille 25, pour assurer un positionnement relatif correct du microtranspondeur 7 vis-à-vis de la boucle 14 de couplage. La face 26 de la feuille 25 recevant l'antenne d'adaptation 12 peut aussi porter des inscriptions à lire 27 telles que des motifs sécuritaires ou autres. Le film de sécurité 3 est posé par transfert. La feuille anti-adhérente 9 est ôtée et l'adhésif 8 est appliqué sur la face inscrite 22. Après activation de cet adhésif 8, la feuille support 2 est détachée. Il ne reste plus que le mince film 3 transparent formé des deux couches 4, 5 de polyuréthane au sein desquelles en microtranspondeur 7 est incorporé, et de la couche d'adhésif 8. Le microtranspondeur 7 non transparent n'occupe qu'une très faible partie de la surface du film de sécurité 3 et est donc très discret Ce microtranspondeur 7 est ainsi incorporé entre la face inscrite 22 de l'objet et la face externe libre du film de sécurité 3.

La couche d'adhésif 20 du film d'antenne 10 est appliquée sur la face 26 pour associer ce film d'antenne, et donc l'antenne d'adaptation 12, à la feuille 25. Le film d'antenne 10 est ou non transparent, selon que la feuille support 11 est ou non transparente.

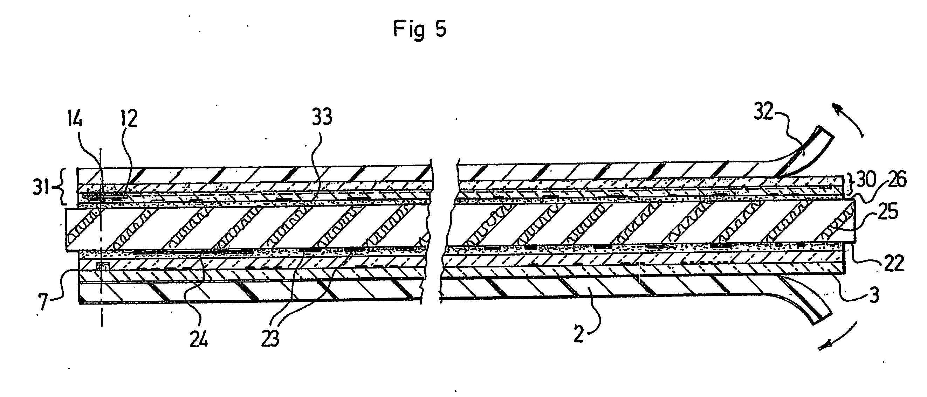

La figure 5 représente une variante de réalisation dans laquelle l'antenne d'adaptation 12 est incorporée au sein d'un film mince 30 multicouche, par exemple semblable au film de sécurité 3 décrit ci-dessus et tel que décrit par EP 0271941 ou US 5 232 527. L'antenne d'adaptation 12 peut être imprimée en sérigraphie entre deux couches de vernis continues de ce film d'antenne 30, qui peut être réalisé sous forme d'un transfert, dit transfert d'antenne 31. Le film d'antenne 30 est imprimé sur la feuille support 32 en polystyrène. Il comprend une couche d'adhésif 33 finale apte à être appliquée contre la face 26 de la feuille 25 à protéger. Après activation de l'adhésif 33 et transfert, la feuille support 32 peut être enlevée.

Il est à noter que (variante non représentée) le format du film de sécurité 3 et du film d'antenne 10, 30, peut être supérieur à celui de la feuille 25, de telle sorte que cette dernière se trouve ensuite entièrement emprisonnée et intégrée dans une poche formée entre et par ces deux films 3, 10, 30 dont les bordures périphériques sont collées ensemble.

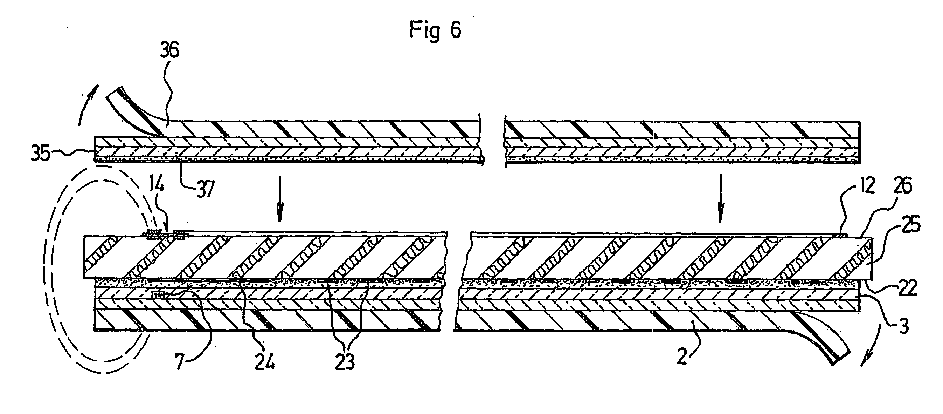

La figure 6 représente une autre variante dans laquelle l'antenne d'adaptation 12 est directement imprimée, par exemple en sérigraphie, sur la face 26 (verso) de la feuille 25 à protéger. On peut ensuite couvrir cette antenne d'un film protecteur 35, transparent ou non, multicouche ou non, réalisé sous forme d'un transfert (imprimé sur une feuille support 36 détachable comme représenté figure 6) ou non, et doté d'une couche d'adhésif 37 pour son collage sur la face 26 au-dessus de l'antenne d'adaptation 12 préalablement imprimée.

En variante non représentée, si la place disponible le permet, l'antenne d'adaptation 12 pourrait être imprimée directement sur la face inscrite 22 autour et à côté des inscriptions à lire 23. Si l'on utilise une composition d'encre conductrice transparente (incorporant dans une base d'impression transparente, une proportion suffisante de polymère conducteur transparent tel que du BAYTRON P ® commercialisé par la société BAYER AG, ALLEMAGNE, ou décrit dans EP-593111 ou EP-602713) l'antenne d'adaptation 12 est suffisamment transparente pour permettre la lecture à travers elle, et peut être imprimée ou appliquée à chevauchement d'inscriptions à lire 23.

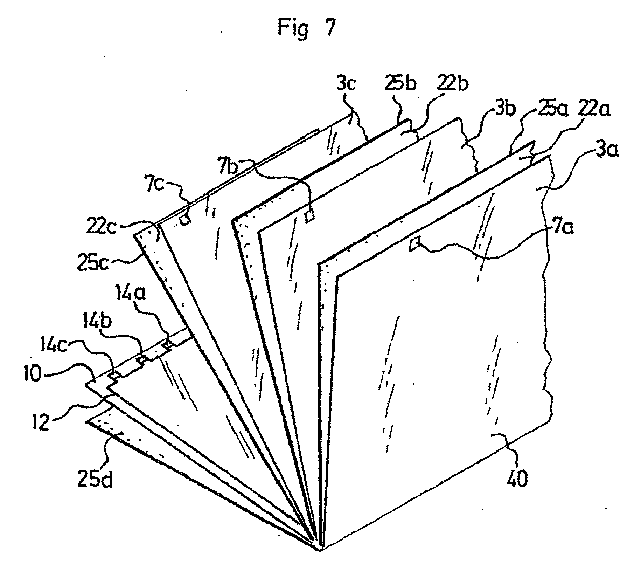

Un même film de sécurité 3 peut incorporer plusieurs microtranspondeurs 7 (variante non représentée). Le dispositif de protection peut aussi comprendre plusieurs films de sécurité 3, si l'objet comporte plusieurs faces inscrites à protéger. Plusieurs antennes de puissance 12 peuvent être prévues, par exemple une pour chaque feuille de l'objet à protéger. Mais, de préférence, comme représenté figure 7, dans le cas d'un objet sous forme d'un carnet 40 à plusieurs feuilles 25a, 25b, 25c, 25d (par exemple un passeport), on peut prévoir plusieurs films de sécurité 3a, 3b, 3c, et une seule antenne d'adaptation 12 dotée d'une pluralité de boucles de couplage 14a, 14b, 14c qui sont décalées latéralement les unes par rapport aux autres. Chaque film de sécurité 3a, 3b, 3c comprend un microtranspondeur 7a, 7b, 7c. Ces microtranspondeurs 7a, 7b, 7c, sont décalés de façon à venir respectivement en regard des boucles de couplage 14a, 14b, 14c lorsque le carnet 40 est refermé avec ses feuilles 25a, 25b, 25c, 25d superposées. L'antenne d'adaptation 12 est portée par un film d'antenne 10 appliqué sur l'une des faces d'une feuille 25d, qui est ou non une couverture du carnet 40. Dans l'exemple représenté, les films de sécurité 3a, 3b, 3c sont collés sur des faces inscrites 22a, 22b, 22c orientées dans le même sens, à des fins uniquement d'illustration. Les autres faces des feuilles 25a, 25b, 25c, 25d peuvent aussi être des faces inscrites recevant un film de sécurité à microtranspondeur(s).

Plusieurs formes de réalisation peuvent être envisagées concernant le microtranspondeur 7 et son utilisation. Le microtranspondeur 7 peut être un microcircuit à mémoire. Dans ce cas, des informations d'authentification peuvent être enregistrées dans la mémoire du microtranspondeur 7, de préférence sous forme cryptée et de façon irréversible, notamment dans une mémoire morte, de façon bien connue en soi. Cet enregistrement peut être effectué via l'antenne d'adaptation 12 et se trouve ainsi facilité. Ces informations d'authentification peuvent être constituées de tout ou partie des inscriptions à lire 23 et/ou d'une clé et/ou d'un algorithme de lecture d'autres informations enregistrées dans le microtranspondeur 7, ou dans une base de données enregistrée sur un système informatique distinct Ainsi, on peut enregistrer dans le microtranspondeur 7 des données numériques représentant des inscriptions à lire et/ou des instructions pouvant être exécutées par un miroprocesseur du microtranspondeur 7 pour effectuer un calcul algorithmique. En variante ou en combinaison, on peut enregistrer dans une mémoire du microtranspondeur 7 des données numériques représentant, sous forme cryptée ou non, un certificat d'authentification, c'est-à-dire le résultat d'un calcul algorithmique effectué sur des informations représentant les inscriptions à lire (par exemple un calcul de parité, un CRC (contrôle de redondance cyclique)...).

Le microtranspondeur 7 peut aussi être simplement constitué d'une puce à logique câblée (circuit intégré logique), permettant de réaliser un algorithme spécifique à partir de données d'entrées, dépendant des inscriptions à lire, qui lui sont fournies lors de la vérification de l'authenticité, le résultat de cet algorithme permettant d'authentifier les inscriptions à lire.

Dans tous les cas, le microtranspondeur 7 peut délivrer, lors d'une lecture via son antenne individuelle, des informations d'authentification des inscriptions à lire.

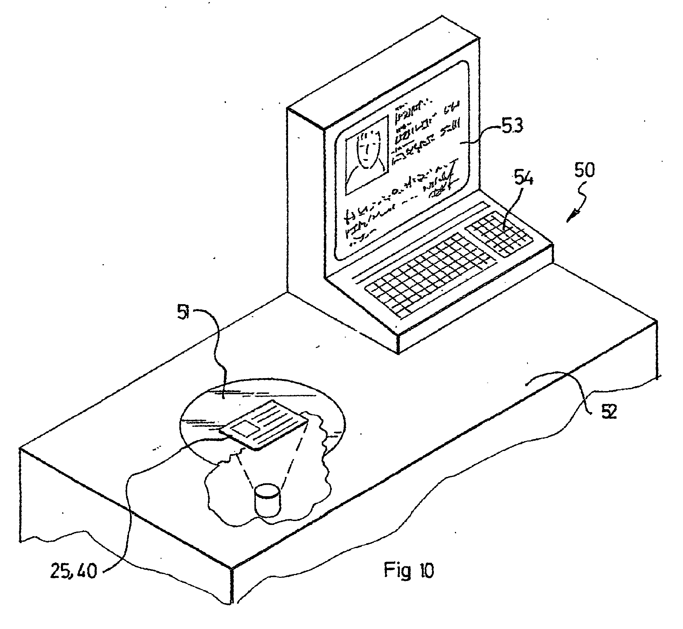

La figure 10 représente un schéma d'un dispositif de lecture 50 et d'un procédé d'utilisation d'un objet 25, 40 protégé selon l'invention. Ce dispositif de lecture 50 comprend une antenne de puissance 51, de format par exemple circulaire, supérieur à celui de l'objet 25, 40. Lorsque l'objet est placé dans le champ magnétique de cette antenne de puissance 51, les informations d'authentification délivrées par chaque microtranspondeur 7 peuvent être lues, via son antenne individuelle et la boucle 14 de couplage électromagnétique de l'antenne d'adaptation 12, par le dispositif de lecture 50 qui comporte des moyens informatiques appropriés, un clavier 54 et un écran 53 d'affichage où les inscriptions à lire 23 protégées par chaque film de sécurité 3, peuvent être affichées.

L'antenne de puissance 51 peut être matérialisée sur une table 52 du dispositif de lecture 50. Il est à noter que grâce à l'antenne d'adaptation 12, le positionnement latéral de l'objet 25, 40 par rapport à l'antenne de puissance 51 n'a pas à être précis. En outre, la distance de lecture (distance entre l'objet et cette antenne de puissance 51) peut être relativement grande (plusieurs millimètres, voire plusieurs centimètres), ce qui facilite les opérations et les rend plus fiables. Le dispositif de lecture 50 et l'antenne de puissance 51 peuvent servir aussi pour transmettre des informations à chaque microtranspondeur 7 (données d'entrée ou de contrôle) ou en assurer l'alimentation en énergie électrique via l'antenne d'adaptation 12 et chaque antenne individuelle.

Les dimensions de l'antenne d'adaptation 12 sont inférieures à celles de l'antenne de puissance 51, de telle sorte que cette antenne d'adaptation 12 puisse être inscrite dans le champ magnétique de l'antenne de puissance 51 lorsque l'objet est placé sur le dispositif de lecture en position de lecture. Les dimensions de l'antenne d'adaptation 12 sont par ailleurs aussi grandes que possible, compte tenu de la place disponible sur l'objet, c'est-à-dire des dimensions de la face 26 sur laquelle l'antenne d'adaptation 12 est appliquée. L'antenne d'adaptation 12 présente des dimensions qui correspondent au moins sensiblement à celles de la périphérie de la face 26 et en général, comme dans les modes de réalisation représentés, à celles de la périphérie de la face inscrite 22. L'antenne d'adaptation 22 présente une dimension radiale supérieure de 1 cm, typiquement de l'ordre de 5 cm, alors que l'antenne individuelle d'un microtranspondeur 7 présente une dimension radiale inférieure à 5 mm, typiquement de l'ordre de 2 mm, et que l'antenne de puissance 51 d'un dispositif de lecture 50 présente des dimensions radiales supérieures à 5 cm, typiquement de l'ordre de 10 cm à 20 cm.

### Exemple:

Un film de sécurité 3 comprenant un microtranspondeur, et un film d'antenne 10 ont été réalisés avec les matériaux et valeurs donnés dans le tableau suivant :

| | | **Composition d'impression on matière** | **Dimensions (mm)** |
|---|---|---|---|
| **FILM DE SECURITE :** | | | |
| Feuille support 2: | | Polystyrène ROBEX 515PH commercialisé par ROYALITE PLASTICS (Italie) | 88 x 125 |
| Couches de polyuréthane 4, 5 : | | Vernis Polyuréthane bi-composant S3H/M40-1 Maille 77 - commercialisé par TIFLEX (France) | 84 x 121 |
| Couche d'adhésif: | | Adhésif thermoscellable n° 2-ADTA21-Maille 51- commercialisé par TIFLEX (France) | 84 x 121 |
| Microtranspondeur: | | ICL-Link® PicoPass® 2kbits ou 16kbits commercialisé par INSIDE TECHNOLOGIES (France) | 2 x 2x 0,180 |
| **FILM D'ANTENNE :** | | | |
| Feuille support 11 : | | Polyester 50 µm, traité VIFS1 commercialisé par REXOR (France) | 88 x 125 |
| Antenne d'adaptation 12: | | | |
| | Encre conductrice 1 | Encre argentique réf.5028 - Maille 77 commercialisée par Dupont de Nemours (USA) | 82 x 119 |
| | Vernis isolant | Base de coupage UVIPRIM CV - Maille 120 - commercialisée par TIFLEX (France) | 83 x 120 |
| Adhésif : | | Adhésif thermoscellable n° 2-ADTH21-Maille 51 commercialisé par TIFLEX (France) | 88 x 125 |

On a appliqué les films comme représenté figure 4 au recto et au verso d'une feuille d'un passeport. On a pu enregistrer des informations dans la mémoire du microtranspondeur 7, et les relire aisément avec un dispositif tel que représenté figure 10.

L'invention peut faire l'objet d'un grand nombre de variantes par rapport aux modes de réalisation décrits ci-dessus uniquement à titre d'exemples non limitatifs. Ainsi, notamment, le format des films 3, 10, 30 peut être non rectangulaire (carré, polygonal, arrondi, ovale, circulaire ...) ; la forme de l'antenne d'adaptation 12 peut être non rectangulaire ; les couches formant les films peuvent être des vernis autres que polyuréthanes, notamment du type acrylique ou autre ; le nombre d'antenne(s) de puissance 12 et de microtranspondeur(s) 7 par objet (feuille ou carnet ...) ou par film 3, 10, 30 peut être différent de 1 ; les zones 14 de couplage électromagnétique peuvent être de toute autre forme que des boucles carrées (circulaires, polygonales, chicane, sinueuses comme décrit par EP 0826190 ou US 5 955 723...), dès lors que cette forme favorise le couplage électromagnétique. Une zone de couplage peut être formée aussi simplement d'un coin ou d'une portion de l'antenne d'adaptation 12 où la courbure est importante, correspondant à la courbure de l'antenne individuelle d'un microtranspondeur 7. Les films et impressions peuvent être réalisées autrement que par sérigraphie (héliographie, offset, taille douce, jet d'encre ...).

## Revendications

1. Procédé de protection d'inscriptions à lire (23) réalisées sur au moins une face, dite face inscrite (22), d'un objet, dans lequel :
- on associe à l'objet au moins une antenne, dite antenne d'adaptation (12), réalisée par impression sur un support (11, 26, 32), cette antenne d'adaptation (12) présentant au moins une zone, dite zone (14) de couplage, pour son couplage électromagnétique avec une antenne individuelle de dimensions plus petites que celles de l'antenne d'adaptation (12),
- on couvre des inscriptions à lire (23) d'au moins une face inscrite de l'objet avec un film protecteur, dit film de sécurité (3), transparent adhérant sur cette face inscrite (22), ledit film de sécurité (3) ne portant pas d'antenne d'adaptation (12), mais portant au moins un microcircuit à antenne individuelle intégrée, dit microtranspondeur (7), en une position prédéterminée pour, après la pose du film de sécurité (3) sur ladite face inscrite (22) de l'objet et pour au moins une position ou un état de l'objet :
• permettre le couplage électromagnétique de l'antenne individuelle, avec une zone (14) de couplage de l'antenne d'adaptation (12) associée à l'objet, pour la lecture sans contact à distance d'informations d'authentification pouvant être délivrées par ce microtranspondeur (7) et étant adaptées pour permettre l'authentification d'au moins une partie des inscriptions à lire,
• ne pas masquer une partie essentielle des inscriptions à lire (23),
- l'antenne d'adaptation (12) ayant des dimensions adaptées pour permettre la transmission d'informations à distance entre l'antenne individuelle et une antenne de puissance (51) d'un dispositif de lecture alors que l'objet est placé dans le champ de cette antenne de puissance (51).

2. Procédé selon la revendication 1, **caractérisé en ce qu'**au moins une antenne d'adaptation (12) est imprimée sur un support d'impression (11, 26, 32) qui n'est pas un film de sécurité (3) portant au moins un microtranspondeur (7).

3. Procédé selon l'une des revendications 1 ou 2, **caractérisé en ce qu'**au moins une antenne d'adaptation (12) est imprimée sur une face (26) de l'objet.

4. Procédé selon la revendication 3, **caractérisé en ce qu'**on couvre ensuite l'antenne d'adaptation (12) d'un film protecteur (35).

5. Procédé selon l'une des revendications 1 à 4, **caractérisé en ce qu'**au moins une antenne d'adaptation (12) est imprimée sur une face inscrite (22) avant d'appliquer un film de sécurité (3) sur cette face inscrite (22).

6. Procédé selon l'une des revendications 1 à 5, **caractérisé en ce qu'**au moins une antenne d'adaptation (12) est imprimée sur une face (26) de l'objet qui n'est pas une face inscrite (22).

7. Procédé selon l'une des revendications 1 à 6, **caractérisé en ce qu'**on utilise au moins une antenne d'adaptation (12) portée par un film de matière synthétique, dit film d'antenne (10, 30), et on fait adhérer ce film d'antenne (10, 30) à une face (26) de l'objet.

8. Procédé selon la revendication 7, **caractérisé en ce qu'**on applique et on fait adhérer le film d'antenne (10, 30) sur une face (26) de l'objet qui n'est pas une face inscrite (22).

9. Procédé selon la revendication 8, **caractérisé en ce qu'**on applique et on fait adhérer le film d'antenne (10, 30) sur une face (26) de l'objet qui est le verso d'une feuille (25) de l'objet dont le recto est une face inscrite (22).

10. Procédé selon l'une des revendications 1 à 9, **caractérisé en ce qu'**on utilise au moins une antenne d'adaptation (12) imprimée avec une encre transparente à la lumière visible et électriquement conductrice après séchage.

11. Procédé selon la revendication 7 et l'une des revendications 1 à 10, **caractérisé en ce qu'**on utilise au moins un transfert, dit transfert d'antenne (31), comprenant une feuille support (32) portant un film d'antenne (30) adhésif, ce transfert d'antenne (31) étant adapté pour permettre l'application et l'adhésion du film d'antenne (30) sur une face (26) de l'objet avec la séparation du film d'antenne (30) de la feuille support (32).

12. Procédé selon l'une des revendications 1 à 11, **caractérisé en ce qu'**on utilise au moins une antenne d'adaptation (12) comprenant une capacité (13) électrique de valeur ajustable.

13. Procédé selon l'une des revendications 1 à 12, **caractérisé en ce qu'**on utilise au moins une antenne d'adaptation (12) formant un circuit électrique résonnant comprenant une capacité électrique incorporée dans un motif graphique du film d'antenne et/ou de l'objet, ou superposée à un tel motif.

14. Procédé selon l'une des revendications 1 à 13, **caractérisé en ce qu'**on utilise au moins une antenne d'adaptation (12) imprimée par sérigraphie.

15. Procédé selon l'une des revendications 1 à 14, **caractérisé en ce qu'**on utilise au moins une même antenne d'adaptation (12) comprenant plusieurs zones (14) de couplage électromagnétique pour son couplage avec plusieurs antennes individuelles de plusieurs microtranspondeurs (7).

16. Procédé selon l'une des revendications 1 à 15, **caractérisé en ce qu'**on utilise plusieurs films de sécurité (3a, 3b, 3c) comprenant chacun au moins un microtranspondeur (7a, 7b, 7c), pour la protection d'inscriptions à lire (23) sur plusieurs faces inscrites (22a, 22b, 22c) de l'objet.

17. Procédé selon l'une des revendications 1 à 16, **caractérisé en ce qu'**on utilise au moins un film de sécurité (3) comprenant au moins un microtranspondeur (7) incorporé dans son épaisseur.

18. Procédé selon l'une des revendications 1 à 17, **caractérisé en ce qu'**on utilise au moins un film de sécurité (3) multicouche.

19. Procédé selon l'une des revendications 1 à 18, **caractérisé en ce qu'**on utilise au moins un film de sécurité (3) réalisé par impression, incorporant au moins un microtranspondeur (7) dans l'épaisseur du film de sécurité (3) lors de la réalisation par impression du film de sécurité (3), entre deux couches (4, 5) imprimées.

20. Procédé selon l'une des revendications 1 à 19, **caractérisé en ce qu'**on utilise au moins un film de sécurité (3) réalisé par impression sérigraphique.

21. Procédé selon l'une des revendications 1 à 20, **caractérisé en ce qu'**on utilise au moins un transfert, dit transfert de protection (1), comprenant une feuille support (2) portant un film de sécurité (3) adhésif, ce transfert de protection (1) étant adapté pour permettre l'application et l'adhésion du film de sécurité (3) sur une face inscrite (22) de l'objet avec la séparation du film de sécurité (3) de la feuille support (2).

22. Procédé selon l'une des revendications 1 à 21, **caractérisé en ce qu'**on enregistre, dans au moins une mémoire d'au moins un microtranspondeur (7) porté par au moins un film de sécurité (3) couvrant des inscriptions à lire, des informations d'authentification d'au moins une partie de ces inscriptions à lire (23).

23. Procédé selon l'une des revendications 1 à 22, **caractérisé en ce qu'**on enregistre, au moins dans au moins une mémoire d'au moins un microtranspondeur (7) porté par au moins un film de sécurité (3) couvrant des inscriptions à lire, des informations d'authentification représentant une clé et/ou un algorithme d'authentification et/ou un certificat résultat d'un algorithme.

24. Procédé selon l'une des revendications 1 à 23, **caractérisé en ce qu'**on utilise au moins un microtranspondeur (7) formant un circuit logique.

25. Dispositif pour la protection d'inscriptions à lire (23) réalisées sur au moins une face, dite face inscrite (22), d'un objet, ce dispositif comprenant :
- au moins une antenne, dite antenne d'adaptation (12), destinée à être associée à l'objet, réalisée par impression sur un support (11, 26, 32), cette antenne d'adaptation présentant au moins une zone, dite zone (14) de couplage, pour son couplage électromagnétique avec une antenne individuelle de dimensions plus petites que celles de l'antenne d'adaptation (12),
- au moins un film protecteur transparent, dit film de sécurité (3), destiné à adhérer sur une face inscrite (22) de l'objet en couvrant des inscriptions à lire (23), ledit film de sécurité (3) ne portant pas d'antenne d'adaptation (12), mais portant au moins un microcircuit à antenne individuelle intégrée, dit microtranspondeur (7), en une position prédéterminée pour, après la pose du film de sécurité (3) sur ladite face inscrite (22) de l'objet et pour au moins une position ou un état de l'objet :
• permettre le couplage électromagnétique de l'antenne individuelle avec une zone (14) de couplage de l'antenne d'adaptation (12) associée à l'objet, pour la lecture sans contact à distance d'informations d'authentification pouvant être délivrées par le microtranspondeur (7) et adaptées pour permettre l'authentification d'au moins une partie des inscriptions à lire,
• ne pas masquer une partie essentielle des inscriptions à lire (23),
- l'antenne d'adaptation (12) ayant des dimensions adaptées pour permettre la transmission d'informations à distance entre l'antenne individuelle et une antenne de puissance (51) d'un dispositif de lecture alors que l'objet est placé dans le champ de cette antenne de puissance (51).

26. Dispositif selon la revendication 25, **caractérisé en ce qu'**au moins une antenne d'adaptation (12) est imprimée sur un support d'impression (11, 26, 32) qui n'est pas un film de sécurité (3) portant au moins un microtranspondeur (7).

27. Dispositif selon l'une des revendications 25 ou 26, **caractérisé en ce que** au moins une antenne d'adaptation (12) est imprimée sur une face (26) de l'objet.

28. Dispositif selon la revendication 27, **caractérisé en ce qu'**il comprend au moins un film protecteur (35) adapté pour couvrir au moins une antenne d'adaptation (12) imprimée.

29. Dispositif selon l'une des revendications 25 à 28, **caractérisé en ce qu'**au moins une antenne d'adaptation (12) est imprimée sur une face inscrite (22).

30. Dispositif selon l'une des revendications 25 à 29, **caractérisé en ce qu'**au moins une antenne d'adaptation (12) est imprimée sur une face (26) de l'objet qui n'est pas une face inscrite (22).

31. Dispositif selon l'une des revendications 25 à 30, **caractérisé en ce qu'**il comprend au moins un film de matière synthétique, dit film d'antenne (10, 30) portant au moins une antenne d'adaptation (12) imprimée

32. Dispositif selon l'une des revendications 25 à 31, **caractérisé en ce qu'**au moins une antenne d'adaptation (12) est imprimée avec une encre transparente à la lumière visible et électriquement conductrice après séchage.

33. Dispositif selon la revendication 31 et l'une des revendications 25 à 32, **caractérisé en ce qu'**il comprend au moins un transfert, dit transfert d'antenne (31), comprenant une feuille support (32) portant un film d'antenne (30) adhésif, ce transfert d'antenne (31) étant adapté pour permettre l'application et l'adhésion du film d'antenne (30) sur une face (26) de l'objet avec la séparation du film d'antenne (30) de la feuille support (32).

34. Dispositif selon l'une des revendications 25 à 33, **caractérisé en ce qu'**au moins une antenne d'adaptation (12) comprend une capacité (13) électrique de valeur ajustable.

35. Dispositif selon l'une des revendications 25 à 34, **caractérisé en ce qu'**au moins une antenne d'adaptation (12) forme un circuit résonnant comprenant une capacité électrique incorporée dans un motif graphique du film d'antenne et/ou de l'objet, ou superposée à un tel motif.

36. Dispositif selon l'une des revendications 25 à 35, **caractérisé en ce qu'**il comprend au moins une même antenne d'adaptation (12) comprenant plusieurs zones (14a, 14b, 14c) de couplage électromagnétique pour son couplage avec plusieurs antennes individuelles de plusieurs microtranspondeurs (7a, 7b, 7c).

37. Dispositif selon l'une des revendications 25 à 36, **caractérisé en ce qu'**il comprend plusieurs films de sécurité (3a, 3b, 3c) comprenant chacun au moins un microtranspondeur (7a, 7b, 7c), pour la protection d'inscriptions à lire (23) sur plusieurs faces (22a, 22b, 22c) inscrites de l'objet,

38. Dispositif selon l'une des revendications 25 à 37, **caractérisé en ce qu'**au moins un film de sécurité (3) comprend au moins un microtranspondeur (7) incorporé dans son épaisseur.

39. Dispositif selon l'une des revendications 25 à 38, **caractérisé en ce qu'**au moins un film de sécurité (3) est multicouche.

40. Dispositif selon l'une des revendications 25 à 39, **caractérisé en ce qu'**au moins un film de sécurité (3) est réalisé par impression et incorpore au moins un microtranspondeur (7) dans son épaisseur entre deux couches (4, 5) imprimées.

41. Dispositif selon l'une des revendications 25 à 40, **caractérisé en ce que** chaque microtranspondeur (7) incorporé à un film de sécurité (3) présente une épaisseur inférieure à 0,2 mm, et, dans le plan du film de sécurité, une aire inférieure à 10mm².

42. Dispositif selon l'une des revendications 25 à 41, **caractérisé en ce que** chaque microtranspondeur (7) incorporé à un film de sécurité (3) présente une épaisseur comprise entre 50 µ et 180 µ.

43. Dispositif selon l'une des revendications 25 à 42, **caractérisé en ce qu'**il comprend au moins un transfert, dit transfert de protection (1), comprenant une feuille support (2) portant un film de sécurité (3) adhésif, ce transfert de protection (1) étant adapté pour permettre l'application et l'adhésion du film de sécurité (3) sur une face inscrite (22) de l'objet avec la séparation du film de sécurité (3) de la feuille support (2).

44. Objet comprenant au moins une face, dite face inscrite (22) sur laquelle des inscriptions à lire (23) sont réalisées, cet objet comprenant :
- au moins une antenne d'adaptation (12) réalisée par impression sur un support (11, 26, 32) et associée à l'objet, cette antenne d'adaptation (12) présentant au moins une zone, dite zone (14) de couplage, pour son couplage électromagnétique avec une antenne individuelle de dimensions plus petites que celles de l'antenne d'adaptation (12),
- au moins un film de sécurité (3), ne portant pas d'antenne d'adaptation (12), mais portant au moins un microcircuit et à antenne individuelle intégrée, dit microtranspondeur (7), ce film de sécurité étant appliqué et adhérant sur une face inscrite (22) de l'objet pour couvrir des inscriptions à lire (23), la position de chaque microtranspondeur (7) étant adaptée pour permettre, au moins pour une position ou un état de l'objet, le couplage électromagnétique de l'antenne individuelle de chaque microtranspondeur (7) avec une zone de couplage d'une antenne d'adaptation (12), l'antenne d'adaptation (12) ayant des dimensions adaptées pour permettre la transmission d'informations à distance entre l'antenne individuelle et une antenne de puissance (51) d'un dispositif de lecture alors que l'objet est placé dans le champ de cette antenne de puissance (51), au moins un microtranspondeur (7) d'un film de sécurité (3) couvrant des inscriptions à lire (23) étant adapté pour pouvoir délivrer des informations d'authentification d'au moins une partie des inscriptions à lire (23).

## Claims

1. Method for protecting readable script (23) formed on at least one face of an object, referred to as a scripted face (22), wherein:
- the object is associated with at least one antenna referred to as a matching antenna (12), formed by printing on a support (11, 26, 32), this matching antenna (12) having at least one zone referred to as a coupling zone (14) for its electromagnetic coupling with an individual antenna whose dimensions are smaller than those of the matching antenna (12),
- readable script (23) on at least one scripted face of the object is covered with a transparent protective film referred to as a security film (3), which adheres to this scripted face (22), said security film (3) not carrying a matching antenna (12) but carrying at least one microcircuit with an integrated individual antenna, referred to as a microtransponder (7), at a predetermined position so that after the security film (3) has been placed on said scripted face (22) of the object and for at least one position or state of the object:
• it permits electromagnetic coupling of the individual antenna with a coupling zone (14) of the matching antenna (12) associated with the object, for the contactless remote reading of authenticating information which can be delivered by this microtransponder (7) and are designed to permit authentication of at least some of the readable script,
• it does not mask any essential part of the readable script (23),
- the matching antenna (12) having dimensions designed to permit the remote transmission of information between the individual antenna and a power antenna (51) of a reading device when the object is placed in the field of this power antenna (51).

2. Method according to claim 1, **characterised in that** at least one matching antenna (12) is printed on a printing support (11, 26, 32) which is not a security film (3) carrying at least one microtransponder (7).

3. Method according to any one of claims 1 and 2, **characterised in that** at least one matching antenna (12) is printed on a face (26) of the object.

4. Method according to claim 3, **characterised in that** the matching antenna (12) is subsequently covered with a protective film (35).

5. Method according to any one of claims 1 to 4, **characterised in that** at least one matching antenna (12) is printed on a scripted face (22) before applying a security film (3) to this scripted face (22).

6. Method according to any one of claims 1 to 5, **characterised in that** at least one matching antenna (12) is printed on a face (26) of the object which is not a scripted face (22).

7. Method according to any one of claims 1 to 6, **characterised in that** at least one matching antenna (12) carried by a film of synthetic material referred to as an antenna film (10, 30) is used, and this antenna film (10, 30) is adhered to a face (26) of the object.

8. Method according to claim 7, **characterised in that** the antenna film (10, 30) is applied and adhered to a face (26) of the object which is not a scripted face (22).

9. Method according to claim 8, **characterised in that** the antenna film (10, 30) is applied and adhered to a face (26) of the object which is the verso of a sheet (25) of the object whose recto is a scripted face (22).

10. Method according to any one of claims 1 to 9, **characterised in that** at least one matching antenna (12) is used that is printed with an ink which is transparent to visible light and electrically conductive after drying.

11. Method according to claim 7 and any one of claims 1 to 10, **characterised in that** at least one transfer referred to as an antenna transfer (31) is used, comprising a support sheet (32) carrying an adhesive antenna film (30), this antenna transfer (31) being designed to make it possible to apply and adhere the antenna film (30) to a face (26) of the object by separating the antenna film (30) from the support sheet (32).

12. Method according to any one of claims 1 to 11, **characterised in that** at least one matching antenna (12) comprising an electrical capacitor (13) of adjustable value is used.

13. Method according to any one of claims 1 to 12, **characterised in that** at least one matching antenna (12) is used which forms a resonant electrical circuit comprising an electrical capacitor incorporated in a graphic pattern of the antenna film and/or of the object, or superimposed with such a pattern.

14. Method according to any one of claims 1 to 13, **characterised in that** at least one matching antenna (12) printed by silkscreen printing is used.

15. Method according to any one of claims 1 to 14, **characterised in that** at least one given matching antenna (12) is used comprising a plurality of electromagnetic coupling zones (14) for coupling it with a plurality of individual antennas of a plurality of microtransponders (7).

16. Method according to any one of claims 1 to 15, **characterised in that** a plurality of security films (3a, 3b, 3c) each comprising at least one microtransponder (7a, 7b, 7c) are used for the protection of readable script (23) on a plurality of scripted faces (22a, 22b, 22c) of the object.

17. Method according to any one of claims 1 to 16, **characterised in that** at least one security film (3) comprising at least one microtransponder (7) incorporated in its thickness is used.

18. Method according to any one of claims 1 to 17, **characterised in that** at least one multilayered security film (3) is used.

19. Method according to any one of claims 1 to 18, **characterised in that** at least one security film (3) formed by printing is used, incorporating at least one microtransponder (7) in the thickness of the security film (3) when the security film (3) is being formed by printing, between two printed layers (4, 5).

20. Method according to any one of claims 1 to 19, **characterised in that** at least one security film (3) formed by silkscreen printing is used.

21. Method according to any one of claims 1 to 20, **characterised in that** at least one transfer referred to as a protection transfer (1) is used, comprising a support sheet (2) carrying an adhesive security film (3), this protection transfer (1) being designed to make it possible to apply and adhere the security film (3) to a scripted face (22) of the object by separating the security film (3) from the support sheet (2).

22. Method according to any one of claims 1 to 21, **characterised in that** information for authenticating at least some of the readable script (23) is recorded in at least one memory of at least one microtransponder (7) carried by at least one security film (3) covering this readable script.

23. Method according to any one of claims 1 to 22, **characterised in that** authenticating information which represents a key and/or an algorithm for authentication and/or a certificate resulting from an algorithm is recorded in at least one memory of at least one microtransponder (7) carried by at least one security film (3) covering readable script.

24. Method according to any one of claims 1 to 23, **characterised in that** at least one microtransponder (7) forming a logic circuit is used.

25. Device for protecting readable script (23) formed on at least one face of an object referred to as a scripted face (22), this device comprising:
- at least one antenna referred to as a matching antenna (12) intended to be associated with the object and formed by printing on a support (11, 26, 32), this matching antenna having at least one zone referred to as a coupling zone (14) for its electromagnetic coupling with an individual antenna whose dimensions are smaller than those of the matching antenna (12),
- at least one transparent protective film referred to as a security film (3), which is intended to adhere to a scripted face (22) while covering readable script (23), said security film (3) not carrying a matching antenna (12) but carrying at least one microcircuit with an integrated individual antenna, referred to as a microtransponder (7), at a predetermined position so that after the security film (3) has been placed on said scripted face (22) of the object and for at least one position or state of the object:
• it permits electromagnetic coupling of the individual antenna with a coupling zone (14) of the matching antenna (12) associated with the object, for the contactless remote reading of authenticating information which can be delivered by this microtransponder (7) and are designed to permit authentication of at least some of the readable script,
• it does not mask any essential part of the readable script (23),
- the matching antenna (12) having dimensions designed to permit the remote transmission of information between the individual antenna and a power antenna (51) of a reading device when the object is placed in the field of this power antenna (51).

26. Device according to claim 25, **characterised in that** at least one matching antenna (12) is printed on a printing support (11, 26, 32) which is not a security film (3) carrying at least one microtransponder (7).

27. Device according to any one of claims 25 and 26, **characterised in that** at least one matching antenna (12) is printed on a face (26) of the object.

28. Device according to claim 27, **characterised in that** it comprises at least one protective film (35) designed to cover at least one printed matching antenna (12).

29. Device according to any one of claims 25 to 28, **characterised in that** at least one matching antenna (12) is printed on a scripted face (22).

30. Device according to any one of claims 25 to 29, **characterised in that** at least one matching antenna (12) is printed on a face (26) of the object which is not a scripted face (22).

31. Device according to any one of claims 25 to 30, **characterised in that** it comprises at least one film of synthetic material referred to as an antenna film (10, 30), which carries at least one printed matching antenna (12).

32. Device according to any one of claims 25 to 31, **characterised in that** at least one matching antenna (12) is printed with an ink which is transparent to visible light and electrically conductive after drying.

33. Device according to claim 31 and any one of claims 25 to 32, **characterised in that** it comprises at least one transfer referred to as an antenna transfer (31), comprising a support sheet (32) carrying an adhesive antenna film (30), this antenna transfer (31) being designed to make it possible to apply and adhere the antenna film (30) to a face (26) of the object by separating the antenna film (30) from the support sheet (32).

34. Device according to any one of claims 25 to 33, **characterised in that** at least one matching antenna (12) comprises an electrical capacitor (13) of adjustable value.

35. Device according to any one of claims 25 to 34, **characterised in that** at least one matching antenna (12) forms a resonant electrical circuit comprising an electrical capacitor incorporated in a graphic pattern of the antenna film and/or of the object, or superimposed with such a pattern.

36. Device according to any one of claims 25 to 35, **characterised in that** it comprises at least one given matching antenna (12) comprising a plurality of electromagnetic coupling zones (14a, 14b, 14c) for coupling it with a plurality of individual antennas of a plurality of microtransponders (7a, 7b, 7c).

37. Device according to any one of claims 25 to 36, **characterised in that** it comprises a plurality of security films (3a, 3b, 3c) each comprising at least one microtransponder (7a, 7b, 7c) for the protection of readable script (23) on a plurality of scripted faces (22a, 22b, 22c) of the object.

38. Device according to any one of claims 25 to 37, **characterised in that** at least one security film (3) comprises at least one microtransponder (7) incorporated in its thickness.

39. Device according to any one of claims 25 to 38, **characterised in that** at least one security film (3) is multilayered.

40. Device according to any one of claims 25 to 39, **characterised in that** at least one security film (3) is formed by printing and incorporates at least one microtransponder (7) in its thickness, between two printed layers (4, 5).

41. Device according to any one of claims 25 to 40, **characterised in that** each microtransponder (7) incorporated in a security film (3) has a thickness of less than 0.2 mm and an area of less than 10 mm² in the plane of the security film.

42. Device according to any one of claims 25 to 41, **characterised in that** each microtransponder (7) incorporated in a security film (3) has a thickness of between 50 µ and 180 µ.

43. Device according to any one of claims 25 to 42, **characterised in that** it comprises at least one transfer referred to as a protection transfer (1), comprising a support sheet (2) carrying an adhesive security film (3), this protection transfer (1) being designed to make it possible to apply and adhere the security film (3) to a scripted face (22) of the object by separating the security film (3) from the support sheet (2).

44. Object comprising at least one face referred to as a scripted face (22) on which readable script (23) is formed, this object comprising:
- at least one matching antenna (12) formed by printing on a support (11, 26, 32) and associated with the object, this matching antenna having at least one zone referred to as a coupling zone (14) for its electromagnetic coupling with an individual antenna whose dimensions are smaller than those of the matching antenna (12),
- at least one security film (3) not carrying a matching antenna (12) but carrying at least one microcircuit with an integrated individual antenna, referred to as a microtransponder (7), this security film being applied and adhering to a scripted face (22) of the object in order to cover readable script (23), the position of each microtransponder (7) being designed so as to permit electromagnetic coupling of the individual antenna of each microtransponder (7) with a coupling zone of a matching antenna (12), for at least one position or state of the object, the matching antenna (12) having dimensions designed to permit the remote transmission of information between the individual antenna and a power antenna (51) of a reading device when the object is placed in the field of this power antenna (51), at least one microtransponder (7) of a security film (3) covering readable script (23) being designed to be able to deliver information for authenticating at least some of the readable script (23).

## Patentansprüche

1. Schutzverfahren von zu lesenden (23), auf wenigstens einer als beschriebene Seite (22) bezeichneten Seite realisierte Beschriftungen eines Objekts, bei dem:
- das Objekt wenigstens einer als Anpassungsantenne (12) bezeichneten, durch Aufdruck auf einem Träger (11, 26, 32) realisierten Antenne zugeordnet wird, wobei diese Anpassungsantenne (12) wenigstens einen als Kopplungsbereich (14) bezeichneten Bereich für seine elektromagnetische Kopplung mit einer Einzelantenne kleinerer Abmessungen als denen der Anpassungsantenne (12), aufweist
- die zu lesenden Beschriftungen (23) wenigstens einer beschriebenen Seite des Objekts mit einer als Sicherheitsfolie (3) bezeichneten transparenten, auf dieser beschriebenen Seite (22) anhaftenden Schutzfolie abgedeckt werden, wobei die genannte Sicherheitsfolie (3) keine Anpassungsantenne (12) trägt, sondern wenigstens einen als Mikrotransponder (7) bezeichneten Mikroschaltkreis mit integrierter Einzelantenne in einer vorbestimmten Position, um nach der Anbringung der Sicherheitsfolie (3) auf der genannten beschriebenen Seite (22) des Objekts für wenigstens eine Position oder einen Zustand des Objekts:
* die elektromagnetische Kopplung der Einzelantenne mit einem Kopplungsbereich (14) der dem Objekt zugeordneten Anpassungsantenne (12) zum entfernten Lesen ohne Kontakt von Authentifizierungsinformationen zu erlauben, die vom Mikrotransponder (7) ausgegeben werden können und angepasst sind, um die Authentifizierung wenigstens eines Teils der zu lesenden Beschriftungen zu erlauben,
* einen wesentlichen Teil der zu lesenden Beschriftungen (23) nicht zu überdecken,
- wobei die Anpassungsantenne (12) angepasste Abmessungen hat, um die entfernte Übertragung von Informationen zwischen der Einzelantenne und einer Leistungsantenne (51) einer Lesevorrichtung zu erlauben, während das Objekt im Feld dieser Leistungsantenne (51) platziert ist.

2. Verfahren gemäß Anspruch 1, **dadurch gekennzeichnet, dass** wenigstens eine Leistungsantenne (12) auf einen Druckträger (11, 26, 32) aufgedruckt ist, die keine wenigstens einen Mikrotransponder (7) tragende Sicherheitsfolie (3) ist.

3. Verfahren gemäß Anspruch 1 oder 2, **dadurch gekennzeichnet, dass** wenigstens eine Anpassungsantenne (12) auf einer Seite (26) des Objekts aufgedruckt ist.

4. Verfahren gemäß Anspruch 3, **dadurch gekennzeichnet, dass** anschließend die Anpassungsantenne (12) mit einer Schutzfolie (35) abgedeckt wird.

5. Verfahren gemäß Anspruch 1 bis 4, **dadurch gekennzeichnet, dass** wenigstens eine Anpassungsantenne (12) auf einer beschriebenen Seite (22) vor der Anwendung einer Sicherheitsfolie (3) auf dieser beschriebenen Seite (22) aufgedruckt wird.

6. Verfahren gemäß Anspruch 1 bis 5, **dadurch gekennzeichnet, dass** wenigstens eine Anpassungsantenne (12) auf einer Seite (26) des Objekts aufgedruckt ist, die nicht eine beschriebene Seite (22) ist.

7. Verfahren gemäß Anspruch 1 bis 6, **dadurch gekennzeichnet, dass** wenigstens eine von einer als Antennenfolie (10, 30) bezeichnete Folie aus Synthetikmaterial getragene Anpassungsantenne (12) verwendet wird und diese Antennenfolie (10, 30) auf einer Seite (26) des Objekts angehaftet wird.

8. Verfahren gemäß Anspruch 7, **dadurch gekennzeichnet, dass** die Antennenfolie (10, 30) auf einer Seite (26) des Objekts, die keine beschriebene Seite (22) ist, angewendet und dort angehaftet wird.

9. Verfahren gemäß Anspruch 8, **dadurch gekennzeichnet, dass** die Antennenfolie (10, 30) auf einer Seite (26) des Objekts ist, die die Rückseite einer Seite (25) des Objekts ist, dessen Vorderseite eine beschriebene Seite (22) ist, angewendet und dort angehaftet wird.

10. Verfahren gemäß Anspruch 1 bis 9, **dadurch gekennzeichnet, dass** wenigstens eine mit einer transparenten, bei Licht sichtbaren und nach dem Trocknen elektrisch leitfähigen Druckfarbe bedruckte Anpassungsantenne (12) verwendet wird.

11. Verfahren gemäß Anspruch 7 und Anspruch 1 bis 10, **dadurch gekennzeichnet, dass** wenigstens ein als Antennentransfer (31) bezeichneter Transfer mit einem eine anhaftende Antennenfolie (30) tragenden Trägerblatt (32) verwendet wird, wobei dieser Antennentransfer (31) angepasst ist, um die Anwendung und die Anhaftung der Antennenfolie (30) auf einer Seite (26) des Objekts mit der Trennung der Antennenfolie (30) von dem Trägerblatt (32) zu erlauben.

12. Verfahren gemäß Anspruch 1 bis 11, **dadurch gekennzeichnet, dass** wenigstens eine Anpassungsantenne (12) mit einer elektrischen Kapazität (13) eines einstellbaren Werts verwendet wird.

13. Verfahren gemäß Anspruch 1 bis 12, **dadurch gekennzeichnet, dass** wenigstens eine einen elektrischen Resonanzschaltkreis mit einer in ein graphisches Motiv der Antennenfolie und / oder des Objekts integrierten oder einem derartigen Motiv überlagerten elektrischen Kapazität bildende Anpassungsantenne (12) verwendet wird.

14. Verfahren gemäß Anspruch 1 bis 13, **dadurch gekennzeichnet, dass** wenigstens eine per Serigraphie bedruckte Anpassungsantenne (12) verwendet wird.

15. Verfahren gemäß Anspruch 1 bis 14, **dadurch gekennzeichnet, dass** wenigstens eine und dieselbe Anpassungsantenne (12) mit mehreren elektromagnetischen Kopplungsbereichen (14) für ihre Kopplung mit mehreren Einzelantennen mehrerer Mikrotransponder (7) verwendet wird.

16. Verfahren gemäß Anspruch 1 bis 15, **dadurch gekennzeichnet, dass** mehrere Sicherheitsfolien (3a, 3b, 3c) mit jeweils wenigstens einem Mikrotransponder (7a, 7b, 7c) für den Schutz der zu lesenden Beschriftungen (23) auf mehreren beschriebenen Seiten (22a, 22b, 22c) des Objekts verwendet werden.

17. Verfahren gemäß Anspruch 1 bis 16, **dadurch gekennzeichnet, dass** wenigstens eine Sicherheitsfolie (3) mit wenigstens einem in seine Dicke integrierten Mikrotransponder (7) verwendet wird.

18. Verfahren gemäß Anspruch 1 bis 17, **dadurch gekennzeichnet, dass** wenigstens eine mehrschichtige Sicherheitsfolie (3) verwendet wird.

19. Verfahren gemäß Anspruch 1 bis 18, **dadurch gekennzeichnet, dass** wenigstens eine per Aufdruck realisierte, bei der Realisierung per Aufdruck der Sicherheitsfolie (3) zwischen zwei bedruckten Schichten (4, 5) wenigstens einen Mikrotransponder (7) in der Dicke der Sicherheitsfolie (3) integrierende Sicherheitsfolie (3) verwendet wird.

20. Verfahren gemäß Anspruch 1 bis 19, **dadurch gekennzeichnet, dass** wenigstens eine per Serigraphiedruck realisierte Sicherheitsfolie (3) verwendet wird.

21. Verfahren gemäß Anspruch 1 bis 20, **dadurch gekennzeichnet, dass** wenigstens ein als Schutztransfer (1) bezeichneter Transfer mit einer eine anhaftende Sicherheitsfolie (3) tragenden Trägerfolie (2) verwendet wird, wobei dieser Schutztransfer (1) angepasst ist, um die Anwendung und die Anhaftung der Sicherheitsfolie (3) auf einer beschriebenen Seite (22) des Objekts mit der Trennung der Sicherheitsfolie (3) des Trägerblattes (2) zu erlauben.

22. Verfahren gemäß Anspruch 1 bis 21, **dadurch gekennzeichnet, dass** in wenigstens einem Speicher wenigstens eines von wenigstens einer zu lesende Beschriftungen abdeckende Sicherheitsfolie (3) getragenen Mikrotransponders (7) Authentifizierungsinformationen wenigstens eines Teils dieser zu lesenden Beschriftungen (23) gespeichert werden.

23. Verfahren gemäß Anspruch 1 bis 22, **dadurch gekennzeichnet, dass** wenigstens in einem Speicher wenigstens eines von wenigstens einer zu lesende Beschriftungen abdeckende Sicherheitsfolie (3) getragenen Mikrotransponders (7) einen Schlüssel und / oder einen Authentifizierungsalgorithmus und / oder ein Zertifikat aus einem Algorithmus darstellende Authentifizierungsinformationen gespeichert werden.

24. Verfahren gemäß Anspruch 1 bis 23, **dadurch gekennzeichnet, dass** wenigstens ein einen logischen Schaltkreis bildender Mikrotransponder (7) verwendet wird.

25. Vorrichtung zum Schutz von auf wenigstens einer als beschriebene Seite (22) bezeichnete Seite eines Objekts realisierten zu lesenden Beschriftungen (23), wobei diese Vorrichtung Folgendes umfasst:
- wenigstens eine als Anpassungsantenne (12) bezeichnete, zur Zuordnung zum Objekt bestimmte, per Aufdruck auf einem Träger (11, 26, 32) realisierte Antenne, wobei diese Anpassungsantenne wenigstens einen als Kopplungsbereich (14) bezeichneten Bereich für ihre elektromagnetische Kopplung mit einer Einzelantenne kleinerer Abmessungen als denen der Anpassungsantenne (12) aufweist,
- wenigstens eine als Sicherheitsfolie (3) bezeichnete, zum Anhaften auf einer beschriebenen Seite (22) des Objekts durch Abdecken der zu lesenden Beschriftungen (23) bestimmte transparente Schutzfolie, wobei die genannte Sicherheitsfolie (3) keine Anpassungsantenne (12) trägt, sondern wenigstens einen Mikroschaltkreis mit als Mikrotransponder (7) bezeichneter integrierter Einzelantenne in einer vorbestimmten Position, um nach der Anbringung der Sicherheitsfolie (3) auf der genannten beschriebenen Seite (22) des Objekts und um wenigstens einer Position oder einem Zustand des Objekts:
* die elektromagnetische Kopplung der Einzelantenne mit einem Kopplungsbereich (14) der dem Objekt zugeordneten Anpassungsantenne (12) zum entfernten Lesen ohne Kontakt von Authentifizierungsinformationen zu erlauben, die vom Mikrotransponder (7) ausgegeben werden können und angepasst sind, um die Authentifizierung wenigstens eines Teils der zu lesenden Beschriftungen zu erlauben,
* einen wesentlichen Teil der zu lesenden Beschriftungen (23) nicht zu überdecken,
- wobei die Anpassungsantenne (12) angepasste Abmessungen hat, um die entfernte Übertragung von Informationen zwischen der Einzelantenne und einer Leistungsantenne (51) einer Lesevorrichtung zu erlauben, während das Objekt im Feld dieser Leistungsantenne (51) platziert ist.

26. Vorrichtung gemäß Anspruch 25, **dadurch gekennzeichnet, dass** wenigstens eine Anpassungsantenne (12) auf einem Druckträger (11, 26, 32) aufgedruckt ist, der keine wenigstens einen Mikrotransponder (7) tragende Sicherheitsfolie (3) ist.

27. Vorrichtung gemäß Anspruch 25 oder 26, **dadurch gekennzeichnet, dass** wenigstens eine Anpassungsantenne (12) auf einer Seite (26) des Objekts aufgedruckt ist.

28. Vorrichtung gemäß Anspruch 27, **dadurch gekennzeichnet, dass** sie wenigstens eine zum Abdecken wenigstens einer aufgedruckten Anpassungsantenne (12) angepasste Schutzfolie (35) umfasst.

29. Vorrichtung gemäß Anspruch 25 bis 28, **dadurch gekennzeichnet, dass** wenigstens eine Anpassungsantenne (12) auf einer beschriebenen Seite (22) aufgedruckt ist.

30. Vorrichtung gemäß Anspruch 25 bis 29, **dadurch gekennzeichnet, dass** wenigstens eine Anpassungsantenne (12) auf einer Seite (26) des Objekts aufgedruckt ist, die keine beschriebene Seite (22) ist.

31. Vorrichtung gemäß Anspruch 25 bis 30, **dadurch gekennzeichnet, dass** sie wenigstens eine als Antennenfolie (10, 30) bezeichnete, wenigstens eine bedruckte Anpassungsantenne (12) tragende Folie aus synthetischem Material umfasst.

32. Vorrichtung gemäß Anspruch 25 bis 31, **dadurch gekennzeichnet, dass** wenigstens eine Anpassungsantenne (12) mit einer transparenten, bei Licht sichtbaren und nach dem Trocknen elektrisch leitfähigen Druckfarbe bedruckt ist.

33. Vorrichtung gemäß Anspruch 31 und Anspruch 25 bis 32, **dadurch gekennzeichnet, dass** sie wenigstens einen als Antennentransfer (31) bezeichneten Transfer mit einem eine anhaftende Antennenfolie (30) tragendes Trägerblatt (32) umfasst, wobei dieser Antennentransfer (31) angepasst ist, um die Anwendung und die Anhaftung der Antennenfolie (30) auf einer Seite (26) des Objekts mit der Trennung der Antennenfolie (30) von der Trägerfolie (32) zu erlauben.

34. Vorrichtung gemäß Anspruch 25 bis 33, **dadurch gekennzeichnet, dass** wenigstens eine Anpassungsantenne (12) eine elektrische Kapazität (13) einstellbaren Werts umfasst.

35. Vorrichtung gemäß Anspruch 25 bis 34, **dadurch gekennzeichnet, dass** wenigstens eine Anpassungsantenne (12) einen Resonanzschaltkreis mit einer in ein graphisches Motiv der Antennenfolie und / oder dem Objekt integrierten oder einem derartigen Motiv überlagerten elektrischen Kapazität bildet.

36. Vorrichtung gemäß Anspruch 25 bis 35, **dadurch gekennzeichnet, dass** sie wenigstens eine und dieselbe Anpassungsantenne (12) mit mehreren elektromagnetischen Kopplungsbereichen (14a, 14b, 14c) für ihre elektromagnetische Kopplung mit mehreren Einzelantennen mehrer Mikrotransponder (7a, 7b, 7c) umfasst.

37. Vorrichtung gemäß Anspruch 25 bis 36, **dadurch gekennzeichnet, dass** sie mehrere Sicherheitsfolien (3a, 3b, 3c) jeweils mit wenigstens einem Mikrotransponder (7a, 7b, 7c) für den Schutz zu lesender Beschriftungen (23) auf mehreren beschriebenen Seiten (22a, 22b, 22c) des Objekts umfasst.

38. Vorrichtung gemäß Anspruch 25 bis 37, **dadurch gekennzeichnet, dass** wenigstens eine Sicherheitsfolie (3) wenigstens einen in seine Dicke integrierten Mikrotransponder (7) umfasst.

39. Vorrichtung gemäß Anspruch 25 bis 38, **dadurch gekennzeichnet, dass** wenigstens eine Sicherheitsfolie (3) mehrschichtig ist.

40. Vorrichtung gemäß Anspruch 25 bis 39, **dadurch gekennzeichnet, dass** wenigstens eine Sicherheitsfolie (3) durch Aufdruck realisiert wird und wenigstens einen Mikrotransponder (7) zwischen zwei bedruckten Schichten (4, 5) in seine Dicke integriert.

41. Vorrichtung gemäß Anspruch 25 bis 40, **dadurch gekennzeichnet, dass** jeder in eine Sicherheitsfolie (3) integrierte Mikrotransponder (7) eine Dicke unter 0,2 mm aufweist und in der Ebene der Sicherheitsfolie eine Zone von weniger als 10 mm².

42. Vorrichtung gemäß Anspruch 25 bis 41, **dadurch gekennzeichnet, dass** jeder in eine Sicherheitsfolie (3) integrierte Mikrotransponder (7) eine zwischen 50 µ und 180 µ inbegriffene Dicke aufweist.

43. Vorrichtung gemäß Anspruch 25 bis 42, **dadurch gekennzeichnet, dass** sie wenigstens einen als Schutztransfer (1) bezeichneten Transfer mit einem eine anhaftende Sicherheitsfolie (3) tragenden Trägerblatt (2) umfasst, wobei dieser Schutztransfer (1) angepasst ist, um die Anwendung und die Anhaftung der Sicherheitsfolie (3) auf einer beschriebenen Seite (22) des Objekts mit der Trennung der Sicherheitsfolie (3) des Trägerblattes (2) zu erlauben.

44. Objekt mit wenigstens einer als beschriebene Seite (22) bezeichneten Seite, auf der zu lesende Beschriftungen (23) realisiert werden, wobei dieses Objekt Folgendes umfasst:
- wenigstens eine per Aufdruck auf einem Träger (11, 26, 32) realisierte und dem Objekt zugeordnete Anpassungsantenne (12), wobei diese Anpassungsantenne (12) wenigstens einen als Kopplungsbereich (14) bezeichneten Bereich für ihre elektromagnetische Kopplung mit einer Einzelantenne kleinerer Abmessungen als denen der Anpassungsantenne (12) aufweist,
- wenigstens eine keine Anpassungsantenne (12) sondern wenigstens einen Mikroschaltkreis mit integrierter Einzelantenne, bezeichnet als Mikrotransponder (7), tragende Sicherheitsfolie (3), wobei diese Sicherheitsfolie auf einer beschriebenen Seite (22) des Objekts angewendet wird und anhaftet, um zu lesende Beschriftungen (23) abzudecken, wobei die Position jedes Mikrotransponders (7) angepasst ist, um wenigstens für eine Position oder einen Zustand des Objekts die elektromagnetische Kopplung der Einzelantenne jedes Mikrotransponders (7) mit einem Kopplungsbereich einer Anpassungsantenne (12) zu erlauben, wobei die Anpassungsantenne (12) angepasste Abmessungen hat, um die entfernte Übertragung von Informationen zwischen der Einzelantenne und einer Leistungsantenne (51) einer Lesevorrichtung zu erlauben, während das Objekt in das Feld dieser Leistungsantenne (51) platziert wird, wobei wenigstens ein Mikrotransponder (7) einer zu lesende Beschriftungen (23) abdeckende Sicherheitsfolie (3) angepasst ist, um Authentifizierungsinformationen wenigstens eines Teils der zu lesenden Beschriftungen (23) ausgeben zu können.
